(19) Europäisches Patentamt
European Patent Office
Office européen des brevets

(11) EP 4 079 517 A1

(12) EUROPEAN PATENT APPLICATION
published in accordance with Art. 153(4) EPC

(43) Date of publication:
26.10.2022 Bulletin 2022/43

(21) Application number: 20902895.0

(22) Date of filing: 16.12.2020

(51) International Patent Classification (IPC):
*B32B 27/00* (2006.01) *C09J 131/02* (2006.01)
*C09J 133/04* (2006.01) *C09J 133/08* (2006.01)
*C09J 133/10* (2006.01) *C09J 201/00* (2006.01)
*C09J 7/21* (2018.01) *C09J 7/22* (2018.01)
*C09J 7/26* (2018.01) *C09J 7/38* (2018.01)

(52) Cooperative Patent Classification (CPC):
**B32B 27/00; C09J 7/21; C09J 7/22; C09J 7/26; C09J 7/38; C09J 131/02; C09J 133/04; C09J 133/08; C09J 133/10; C09J 201/00**

(86) International application number:
**PCT/JP2020/047065**

(87) International publication number:
**WO 2021/125247 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2019 JP 2019228528**
**24.09.2020 JP 2020159983**

(71) Applicant: **SEKISUI CHEMICAL CO., LTD.**
**Osaka-shi**
**Osaka**
**530-8565 (JP)**

(72) Inventors:
- **KATAOKA, Hiroyuki**
**Inukami-gun, Shiga 522-0314 (JP)**
- **YAMAMOTO, Hiroki**
**Inukami-gun, Shiga 522-0314 (JP)**
- **ADACHI, Aya**
**Inukami-gun, Shiga 522-0314 (JP)**
- **HIDA, Tomohiro**
**Inukami-gun, Shiga 522-0314 (JP)**

(74) Representative: **Ter Meer Steinmeister & Partner**
**Patentanwälte mbB**
**Nymphenburger Straße 4**
**80335 München (DE)**

# (54) ADHESIVE AGENT, ADHESIVE TAPE, ELECTRICAL APPLIANCE, ONBOARD MEMBER, AND SECURING METHOD

(57) A pressure-sensitive adhesive comprising a polymer (X1) containing 48% by mass or more of a constituent unit derived from at least one monomer (Y) selected from the group consisting of a monomer (A1) represented by the following general formula (1) and a monomer (B1) represented by the following general formula (2), in which a tan δ (23°C) determined as G" (23°C)/G' (23°C) is 0.8 to 1.3, wherein a storage elastic modulus and a loss coefficient at 23°C are respectively represented by G' (23°C) and G" (23°C). In the formula (1), $R^1$ represents H or $CH_3$, $R^2$ represents $-C_nH_{2n+1}$ and n represents an integer of 7 to 14. In the formula (2), $R^3$ represents $-C(=O)C_mH_{2m+1}$ and m represents an integer of 7 to 13. Thus, retention force under high temperature, low-temperature attachability, and adhesiveness to a low-polar adherend are favorable along with a high bio rate.

EP 4 079 517 A1

## Description

Technical Field

The present invention relates to a pressure-sensitive adhesive, a pressure-sensitive adhesive tape, a pressure-sensitive adhesive sheet, an electrical appliance and an on-board member each comprising the pressure-sensitive adhesive, the pressure-sensitive adhesive tape or the pressure-sensitive adhesive sheet, and a securing method using the pressure-sensitive adhesive or the pressure-sensitive adhesive tape.

Background Art

Pressure-sensitive adhesive tapes comprising pressure-sensitive adhesive layers comprising pressure-sensitive adhesives have been widely used conventionally in order to secure various parts in electrical appliances, vehicles, houses, building materials, and the like. Such pressure-sensitive adhesives known include a pressure-sensitive adhesive comprising an acrylic polymer with as a main component a constituent unit derived from an acrylic (meth)acrylate such as 2-ethylhexyl acrylate or n-butyl acrylate (see, for example, PTLs 1 and 2).

Citation List

Patent Literature

PTL 1: JP 2015-021067 A
PTL 2: JP 2015-120876 A

Summary of Invention

Technical Problem

In recent years, assembling using pressure-sensitive adhesive tapes has also been increasingly performed under various environments due to globalization of production bases of various companies. For example, products demanded to have performance even under high-temperature environments, such as electrical appliances and on-board members, may also be sometimes assembled in cold climates, and pressure-sensitive adhesives may be sometimes demanded to have high retention force under high temperature and also low-temperature attachability which easily allows for attachment to adherends even under low temperature.

While such low-temperature attachability requires high fluidity under low-temperature environments, an enhancement in retention force under high temperature requires cohesion force under high-temperature environments, and general pressure-sensitive adhesives may sometimes have a difficulty in satisfying both such properties. Furthermore, pressure-sensitive adhesives, although are generally hardly increased in adhesion force to low-polar adherends, are required to be increased in adhesion force to low-polar adherends in applications of on-board members and parts in electrical appliances because low-polar resins such as polyolefin-based resins typified by polypropylene resins are often used in such applications.

On the other hand, depletion of petroleum resources and emission of carbon dioxide due to combustion of petroleum-derived products are considered problematic. There is an attempt for petroleum resource-saving by use of biological materials instead of petroleum-derived materials mainly in the medical field and the packaging material field. Such an attempt has an impact on various fields, and use of biological materials is demanded also in the pressure-sensitive adhesive field and the pressure-sensitive adhesive tape field.

It has been found according to studies by the present inventors that an acrylic pressure-sensitive adhesive with as a main component a constituent unit derived from n-butyl acrylate conventionally generally used can be sometimes favorable in all retention force under high temperature, low-temperature attachability, and adhesiveness to a low-polar adherend such as a polyolefin resin. However, an alkyl (meth)acrylate having a small number of carbon atoms, such as n-butyl acrylate, is a petroleum-derived product, and the content rate of biological carbon (namely, bio rate) cannot be sufficiently enhanced.

An object of the present invention is to provide a pressure-sensitive adhesive and a pressure-sensitive adhesive sheet, in which retention force under high temperature, low-temperature attachability, and adhesiveness to a low-polar adherend such as a polyolefin resin can all be favorable along with a high bio rate.

Solution to Problem

The present inventors have made intensive studies, and as a result, have found that the above problem can be solved by adopting a predetermined monomer component in a polymer for use in a pressure-sensitive adhesive and setting a tan δ (23°C) in a specified range, and thus have completed the following present invention. Specifically, the gist of the present invention relates to the following [1] to [32].

[1] A pressure-sensitive adhesive comprising a polymer (X1) containing 48% by mass or more of a constituent unit derived from at least one monomer (Y) selected from the group consisting of a monomer (A1) represented by the following general formula (1) and a monomer (B1) represented by the following general formula (2), having a tan δ (23°C) of 0.8 to 1.3 which is determined as G" (23°C)/G' (23°C), wherein a storage elastic modulus and a loss elastic modulus at 23°C are respectively represented by G' (23°C) and G" (23°C):

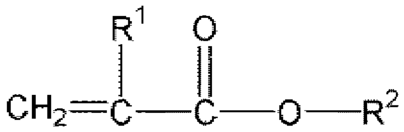
(1)

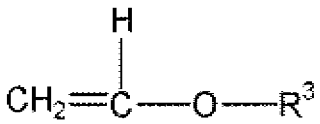
(2)

wherein $R^1$ represents H or $CH_3$, $R^2$ represents $-C_nH_{2n+1}$ and n represents an integer of 7 to 14, and wherein $R^3$ represents $-C(=O)C_mH_{2m+1}$ and m represents an integer of 6 to 13.

[2] The pressure-sensitive adhesive according to [1], wherein a weight-average molecular weight of the polymer (X1) is 200000 to 1000000.

[3] The pressure-sensitive adhesive according to [1] or [2], having a crosslinking degree of 10 to 70%.

[4] The pressure-sensitive adhesive according to any one of [1] to [3], having a log G' (0°C) [Pa] of 5.0 to 6.5, wherein a storage elastic modulus at 0°C is represented by G' (0°C).

[5] The pressure-sensitive adhesive according to any one of [1] to [4], having a log G' (23°C) [Pa] of 4.8 to 5.5, wherein a storage elastic modulus at 23°C is represented by G' (23°C).

[6] The pressure-sensitive adhesive according to any one of [1] to [5], having a log G' (80°C) [Pa] of 4.1 to 4.8, wherein a storage elastic modulus at 80°C is represented by G' (80°C).

[7] The pressure-sensitive adhesive according to any one of [1] to [6], having a glass transition temperature (Tg) of 15°C or less.

[8] The pressure-sensitive adhesive according to any one of [1] to [7], having a content rate of biological carbon of 40% by mass or more.

[9] The pressure-sensitive adhesive according to any one of [1] to [8], further comprising a tackifier.

[10] A pressure-sensitive adhesive tape comprising a pressure-sensitive adhesive layer comprising the pressure-sensitive adhesive according to any one of [1] to [9].

[11] The pressure-sensitive adhesive tape according to [10], further comprising a base material, wherein the pressure-sensitive adhesive layer is provided on at least one surface of the base material.

[12] The pressure-sensitive adhesive tape according to [11], wherein the base material is any selected from the group consisting of a non-woven cloth, a polyethylene terephthalate film and a foam.

[13] A securing method for securing a part constituting an electrical appliance, or an on-board member, by use of the pressure-sensitive adhesive according to any one of [1] to [9] or the pressure-sensitive adhesive tape according to any one of [10] to [12].

[14] A pressure-sensitive adhesive sheet comprising the pressure-sensitive adhesive according to any one of [1] to [9], wherein a peak top molecular weight (Mtp) of a sol content of the pressure-sensitive adhesive, according to gel permeation chromatography (GPC), is 137000 or more and 300000 or less, a sol fraction ($R_{sol}$) in the pressure-sensitive adhesive is 90% by mass or less, and a glass transition temperature (Tg) of the pressure-sensitive adhesive is 5°C or less.

[15] The pressure-sensitive adhesive sheet according to [14], wherein a degree of softness (S) represented by the following general expression (3), of the pressure-sensitive adhesive, is 50000 or more and 180000 or less:

$$S = Mw \times R_{sol}/D \qquad (3)$$

wherein Mw represents a weight-average molecular weight of the sol content of the pressure-sensitive adhesive, according to GPC, $R_{sol}$ represents a sol fraction in the pressure-sensitive adhesive, and D represents a dispersivity of the sol content of the pressure-sensitive adhesive, according to GPC.

[16] The pressure-sensitive adhesive sheet according to [14] or [15], wherein the dispersivity (D) of the sol content of the pressure-sensitive adhesive, according to GPC, is 1.6 or more and less than 3.

[17] The pressure-sensitive adhesive sheet according to any one of [14] to [16], wherein the weight-average molecular weight (Mw) of the sol content of the pressure-sensitive adhesive, according to GPC, is 190000 or more and 700000 or less.

[18] The pressure-sensitive adhesive sheet according to any one of [14] to [17], wherein the sol fraction ($R_{sol}$) in the pressure-sensitive adhesive is 45% by mass or more and 75% by mass or less.

[19] The pressure-sensitive adhesive sheet according to any one of [14] to [18], wherein the glass transition temperature (Tg) of the pressure-sensitive adhesive is 2.5°C or less.

[20] The pressure-sensitive adhesive sheet according to any one of [14] to [19], wherein a bio rate in the pressure-sensitive adhesive is 51% or more.

[21] The pressure-sensitive adhesive sheet according to [20], wherein a content of a constituent unit derived from n-heptyl (meth)acrylate in the polymer (X1) is 48% by mass or more.

[22] A pressure-sensitive adhesive sheet comprising a pressure-sensitive adhesive comprising a biological component, wherein a peak top molecular weight (Mtp) of a sol content of the pressure-sensitive adhesive, according to gel permeation chromatography (GPC), is 137000 or more and 300000 or less, a sol fraction ($R_{sol}$) in the pressure-sensitive adhesive is 90% by mass or less, and a glass transition temperature (Tg) of the pressure-sensitive adhesive is 5°C or less.

[23] The pressure-sensitive adhesive sheet according to [22], wherein a degree of softness (S) represented by the following general expression (3), of the pressure-sensitive adhesive, is 50000 or more and 180000 or less:

$$S = Mw \times R_{sol}/D \qquad (3)$$

wherein Mw represents a weight-average molecular weight of the sol content of the pressure-sensitive adhesive, according to GPC, $R_{sol}$ represents a sol fraction in the pressure-sensitive adhesive, and D represents a dispersivity of the sol content of the pressure-sensitive adhesive, according to GPC.

[24] The pressure-sensitive adhesive sheet according to [22] or [23], wherein the dispersivity (D) of the sol content of the pressure-sensitive adhesive, according to GPC, is 1.6 or more and less than 3.

[25] The pressure-sensitive adhesive sheet according to any one of [22] to [24], wherein the weight-average molecular weight (Mw) of the sol content of the pressure-sensitive adhesive, according to GPC, is 190000 or more and 700000 or less.

[26] The pressure-sensitive adhesive sheet according to any one of [22] to [25], wherein the sol fraction ($R_{sol}$) in the pressure-sensitive adhesive is 45% by mass or more and 75% by mass or less.

[27] The pressure-sensitive adhesive sheet according to any one of [22] to [26], wherein the glass transition temperature (Tg) of the pressure-sensitive adhesive is 2.5°C or less.

[28] The pressure-sensitive adhesive sheet according to any one of [22] to [27], wherein a bio rate in the pressure-sensitive adhesive is 51% or more.

[29] The pressure-sensitive adhesive sheet according to any one of [22] to [28], wherein the pressure-sensitive adhesive comprises a polymer (X2) containing 48% by mass or more of a constituent unit derived from at least one monomer (Y2) selected from the group consisting of a monomer (A2) represented by the following general formula (4) and a monomer (B2) represented by the following general formula (5):

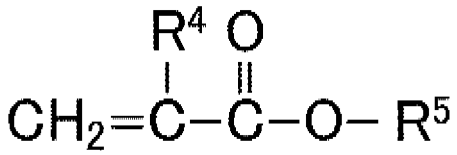 (4)

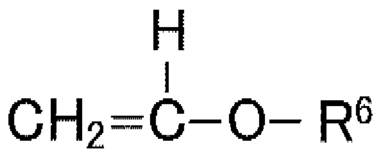 (5)

wherein $R^4$ represents H or $CH_3$, $R^5$ represents $-C_nH_{2n+1}$ and n represents an integer of 7 to 20, and wherein $R^6$ represents $-C(=O)C_mH_{2m+1}$ and m represents an integer of 6 to 13.

[30] The pressure-sensitive adhesive sheet according to [29], wherein a content of a constituent unit derived from n-heptyl (meth)acrylate in the polymer (X2) is 48% by mass or more.

[31] An electrical appliance comprising the pressure-sensitive adhesive according to any one of [1] to [9], or the pressure-sensitive adhesive tape according to any one of [10] to [12], or the pressure-sensitive adhesive sheet according to any one of [14] to [30].

[32] An on-board member comprising the pressure-sensitive adhesive according to any one of [1] to [9], or the pressure-sensitive adhesive tape according to any one of [10] to [12], or the pressure-sensitive adhesive sheet according to any one of [14] to [30].

Advantageous Effects of Invention

According to the pressure-sensitive adhesive and the pressure-sensitive adhesive sheet of the present invention, all retention force under high temperature, low-temperature attachability, and adhesiveness to a low-polar adherend are all favorable along with a high bio rate.

Brief Description of Drawing

[Fig. 1] Fig. 1 is a schematic view for a cohesion force test with a micro-shear slippage displacement measurement tester, and an enlarged view of an A portion.

Description of Embodiments

«First invention»

Hereinafter, a first invention of the present invention is described in detail with reference to embodiments.

<Pressure-sensitive adhesive>

[Polymer (X1)]

The pressure-sensitive adhesive of the present invention comprises a polymer (X1). The polymer (X1) contains a constituent unit derived from at least one monomer (Y1) selected from the group consisting of a monomer (A1) represented by the following general formula (1) and a monomer (B1) represented by the following general formula (2). Herein, the term "monomer (Y1)" is also used for collectively describing the monomer (A1) and the monomer (B1).

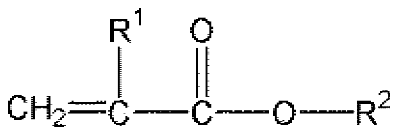 (1)

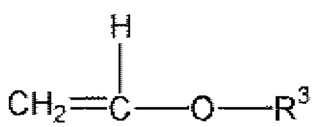 (2)

In the formula (1), $R^1$ represents H or $CH_3$, $R^2$ represents $-C_nH_{2n+1}$ and n represents an integer of 7 to 14. In the formula (2), $R^3$ represents $-C(=O)C_mH_{2m+1}$ and m represents an integer of 6 to 13.

In the present invention, at least any of the constituent units derived from the monomer (A1) and the monomer (B1) is contained, and thus a tan δ (23°C) described below is easily adjusted in an appropriate range and also retention

force under high temperature, low-temperature attachability, and adhesiveness to a low-polar adherend are easily improved. The monomer (A1) and the monomer (B1) are each easily produced from a biological raw material, and a bio rate described below is easily increased.

The polymer (X1) may contain constituent unit(s) derived from one monomer or both monomers of the monomer (A1) and the monomer (B1), and preferably contains a constituent unit derived from the monomer (A1). When the polymer (X1) comprises the constituent unit derived from the monomer (A1), the tan $\delta$ (23°C) is easily adjusted in a desired range and also retention force under high temperature, low-temperature attachability, and adhesiveness to a low-polar adherend are easily improved.

The alkyl group ($-C_nH_{2n+1}$) as $R^2$ in the formula (1) and the alkyl group ($-C_mH_{2m+1}$) in $R^3$ in the formula (2) may be each straight or branched, and are each suitably straight from the viewpoint that the tan $\delta$ (23°C) is easily in an appropriate range. In addition, n in $R^2$ is preferably 7 to 10, more preferably 7 from the viewpoint that the tan $\delta$ (23°C) is easily in an appropriate range. $R^1$ in the formula (1) is preferably H from the viewpoint that pressure-sensitive adhesion performance is improved.

Accordingly, the polymer (X1) preferably contains a constituent unit derived from a monomer (A1) where n is 7 to 10 and $R^2$ is straight in the general formula (1), more preferably contains a constituent unit derived from a monomer (A1) where n is 7 and $R^2$ is straight in the formula, and $R^1$ in such a monomer (A1) here adopted is further preferably H.

Specific examples of the monomer (A1) include n-heptyl (meth)acrylate, n-octyl (meth)acrylate, lauryl (meth)acrylate, n-decyl (meth)acrylate, 2-octyl (meth)acrylate, n-nonyl (meth)acrylate, undecyl (meth)acrylate, tetradecyl (meth)acrylate, and myristyl (meth)acrylate. The monomer (A1) may be used singly or in combinations of two or more kinds thereof.

Specific examples of the monomer (B1) include vinyl caprate, vinyl laurate, vinyl caprylate, and vinyl nonanoate. The monomer (B1) may be used singly or in combinations of two or more thereof.

Among the above-mentioned monomers (A1) and (B1), n-heptyl (meth)acrylate is preferable, and in particular n-heptyl acrylate is more preferable. When n-heptyl (meth)acrylate is used, the tan $\delta$ (23°C) is in an appropriate range, and thus retention force under high temperature, low-temperature attachability, and adhesiveness to a low-polar adherend are easily enhanced.

The "(meth)acrylate" is herein used as a term meaning one of or both acrylate and methacrylate, and much the same is true on other similar terms.

$R^2$ and $R^3$ in the general formulae (1) and (2) are each preferably biological carbon. $R^2$ and $R^3$ can be biological carbon to allow a bio rate described below to be high. The monomers (A1) and (B1), in which $R^2$ and $R^3$ are each biological carbon, can be inexpensively and easily available by adopting a saturated fatty acid or an unsaturated fatty acid collected from an animal, a plant or the like, as a raw material, and converting such a fatty acid into an alcohol or an ester.

In the present invention, the content of the constituent unit derived from the monomer (Y1) (namely, at least one monomer selected from the group consisting of the monomer (A1) and the monomer (B1)) in the polymer (X1) is 48% by mass or more. When the content is less than 48% by mass, the tan $\delta$ (23°C) is hardly adjusted in an appropriate range. In addition, it is difficult to allow all retention force under high temperature, low-temperature attachability, and adhesiveness to a low-polar adherend to be all favorable along with a high bio rate.

The content of the constituent unit derived from the monomer (Y1) is preferably 70% by mass or more, more preferably 80% by mass or more, further preferably 90% by mass or more from the viewpoint that the tan $\delta$ (23°C) is adjusted in a desired range and various performances described above are enhanced along with a high bio rate. The content of the constituent unit derived from the monomer (Y1) is preferably 99% by mass or less, more preferably 98% by mass or less, further preferably 97.5% by mass or less, for example, so that a functional group-containing monomer described below is comprised in a predetermined amount.

The monomer (A1) preferably comprises n-heptyl (meth)acrylate, as described above. The content of the constituent unit derived from n-heptyl (meth)acrylate in the polymer (X1) is preferably 48% by mass or more, more preferably 70% by mass or more, further preferably 80% by mass or more, particularly preferably 90% by mass or more from the viewpoint of the tan $\delta$ (23°C) and from the viewpoint of enhancements in various performances described above along with a high bio rate. The content of the constituent unit derived from n-heptyl (meth)acrylate is preferably 99% by mass or less, more preferably 98% by mass or less, further preferably 97.5% by mass or less.

The polymer (X1) preferably contains a constituent unit derived from any monomer other than the monomer (A1) and the monomer (B1). Such other monomer may be a monomer having a polymerizable carbon-carbon double bond such as a vinyl group or a (meth)acryloyl group. Such other monomer is preferably a monomer containing a polar group (hereinafter, also referred to as "polar group-containing monomer (C)"). The polymer (X1), which contains the constituent unit derived from the polar group-containing monomer (C), thus allows the pressure-sensitive adhesive to be easily increased in pressure-sensitive adhesion force and also easily enhanced in retention force under high temperature, low-temperature attachability, adhesiveness to a low-polar adherend, and the like.

The polar group is a functional group having active hydrogen, and specific examples include a carboxy group,

a hydroxyl group, an amino group, and an amide group. The polar group may be a functional group which can react with a crosslinking agent described below. The polar group-containing monomer (C) may be used singly or in combinations of two or more thereof.

The polar group-containing monomer (C) preferably contains any of a monomer containing a carboxy group (hereinafter, also referred to as "carboxy group-containing monomer (C1)") and a monomer containing a hydroxyl group (hereinafter, also referred to as "hydroxyl group-containing monomer (C2)"), and such monomers are more preferably used in combination.

Examples of the carboxy group-containing monomer (C1) include acrylic acid, methacrylic acid, and crotonic acid. In particular, at least one selected from the group consisting of acrylic acid and methacrylic acid is preferable, and acrylic acid is more preferable.

The content of the constituent unit derived from the carboxy group-containing monomer (C1) in the polymer (X1) is preferably 0.5 to 10% by mass. The content of the constituent unit derived from (C1), which is in the above range, thus allows the pressure-sensitive adhesive to be appropriately high in pressure-sensitive adhesion force and easily enhanced in retention force under high temperature, low-temperature attachability, adhesiveness to a low-polar adherend, and the like. The content of the constituent unit derived from the carboxy group-containing monomer (C1) is more preferably 1 to 8% by mass, further preferably 2 to 6% by mass from such viewpoints.

Examples of the hydroxyl group-containing monomer (C2) include hydroxyl group-containing (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 5-hydroxypentyl (meth)acrylate and 6-hydroxyhexyl (meth)acrylate, and allyl alcohol. In particular, a hydroxyl group-containing (meth)acrylate is preferable, and 2-hydroxyethyl (meth)acrylate is more preferable.

The content of the constituent unit derived from the hydroxyl group-containing monomer (C2) in the polymer (X1) is preferably 0.1 to 15% by mass, preferably 0.05 to 10% by mass, further preferably 0.1 to 5% by mass from the viewpoint that various performances of the pressure-sensitive adhesive are enhanced. The hydroxyl group-containing monomer (C2) is preferably used in combination with the carboxy group-containing monomer (C1), and the content of the constituent unit derived from the hydroxyl group-containing monomer (C2) in the case of such combination use is preferably 0.01 to 5% by mass, more preferably 0.05 to 2% by mass, further preferably 0.1 to 0.9% by mass. In a case where the carboxy group-containing monomer (C1), even in such a small amount, is used in combination, the pressure-sensitive adhesive is enhanced in pressure-sensitive adhesion force and the like, and is easily enhanced in retention force under high temperature, low-temperature attachability, adhesiveness to a low-polar adherend, and the like.

Examples of an amide group-containing monomer include isopropyl(meth)acrylamide and dimethylaminopropyl(meth)acrylamide.

A monomer other than such a functional group-containing monomer may be used as such any monomer other than the monomers (A1) and (B1), and examples include any alkyl (meth)acrylate other than the compound represented by the general formula (1). Examples of such any alkyl (meth)acrylate include alkyl (meth)acrylates each having an alkyl group having 1 to 6 carbon atoms, such as methyl (meth)acrylate, ethyl (meth)acrylate, propyl (meth)acrylate, n-butyl (meth)acrylate, tert-butyl (meth)acrylate and n-hexyl (meth)acrylate, and alkyl (meth)acrylates each having about 15 to 24 carbon atoms, such as cetyl (meth)acrylate, stearyl (meth)acrylate, an ester of 5,7,7-trimethyl-2-(1,3,3-trimethylbutyl)octanol-1 and (meth)acrylic acid, behenyl (meth)acrylate, and arachidyl (meth)acrylate.

Examples of such any other monomer include (meth)acrylates each having an alicyclic structure, such as cyclohexyl (meth)acrylate and isobornyl (meth)acrylate, (meth)acrylates each having an aromatic ring, such as benzyl (meth)acrylate and 2-phenoxyethyl (meth)acrylate, monomers each having an epoxy group, such as glycidyl (meth)acrylate, monomers each having a nitrile group, such as (meth)acrylonitrile, and 2-butoxyethyl (meth)acrylate, tetrahydrofurfuryl (meth)acrylate and styrene.

Such any monomer other than the polar group-containing monomer may also be used singly or in combinations of two or more thereof.

Such any other monomer preferably also contains biological carbon from the viewpoint that a bio rate described below is enhanced, and may also be a petroleum-derived monomer containing no biological carbon.

The weight-average molecular weight (Mw) of the polymer (X1) is preferably 200000 to 1000000.

When the weight-average molecular weight (Mw) is 200000 or more, the pressure-sensitive adhesive can be increased in shear strength and the like and the pressure-sensitive adhesive can be high in retention force under high temperature. When the Mw is 1000000 or less, the pressure-sensitive adhesive is favorable in pressure-sensitive adhesion force and is easily enhanced in low-temperature attachability, adhesiveness to a low-polar adherend, and the like.

The weight-average molecular weight (Mw) is more preferably 300000 or more, further preferably 400000 or more, and more preferably 900000 or less, further preferably 800000 or less, from such viewpoints.

The weight-average molecular weight (Mw) can be appropriately adjusted by appropriately selecting the amount of a polymerization initiator used, polymerization conditions such as the polymerization temperature, the polymerization method, and the like.

The weight-average molecular weight is the weight-average molecular weight in terms of standard polystyrene, as measured by gel permeation chromatography (GPC).

The polymer (X1) serves as a main component in the pressure-sensitive adhesive. The content of the polymer (X1) in the pressure-sensitive adhesive is, for example, 50% by mass or more, preferably 60% by mass or more, more preferably 65% by mass or more in order to impart appropriate pressure-sensitive adhesion performance. The content of the polymer (X1) in the pressure-sensitive adhesive is preferably 99% by mass or less, further preferably 95% by mass or less, further preferably 92% by mass or less so that component(s) other than the polymer (X1) such as a tackifier and/or a crosslinking agent can be compounded in predetermined amount(s) with the pressure-sensitive adhesive.

(Method for producing polymer (X1))

The polymer (X1) can be obtained by a radical reaction of a monomer mixture serving as a raw material as described above, in the presence of a polymerization initiator.

The manner of the radical reaction is not particularly limited, and examples include living radical polymerization and free radical polymerization. Living radical polymerization allows a copolymer having more uniform molecular weight and formulation to be obtained, can allow generation of a low-molecular weight component and the like to be suppressed, and allows the pressure-sensitive adhesive to be high in cohesion force, as compared with free radical polymerization. The polymerization method is not particularly limited, and a conventionally known method can be used. Examples include solution polymerization (boiling point polymerization or constant temperature polymerization), emulsion polymerization, suspension polymerization, and bulk polymerization. In particular, solution polymerization is preferable because synthesis is simple.

In a case where the polymerization method here used is solution polymerization, examples of a reaction solvent include ethyl acetate, toluene, methyl ethyl ketone, methylsulfoxide, ethanol, acetone, and diethyl ether. The reaction solvent may be used singly or in combinations of a plurality thereof.

The polymerization initiator is not particularly limited, and examples include organic peroxide and an azo compound. Examples of the organic peroxide include 1,1-bis(t-hexylperoxy)-3,3,5-trimethylcyclohexane, t-hexylperoxypivalate, t-butylperoxypivalate, 2,5-dimethyl-2,5-bis(2-ethylhexanoylperoxy)hexane, t-hexylperoxy-2-ethylhexanoate, t-butylperoxy-2-ethylhexanoate, t-butylperoxyisobutyrate, t-butylperoxy-3,5,5-trimethylhexanoate, and t-butylperoxylaurate. Examples of the azo compound include azobisisobutyronitrile and azobiscyclohexanecarbonitrile. The polymerization initiator may be used singly or in combinations of a plurality thereof.

In the case of living radical polymerization, examples of the polymerization initiator include an organotellurium polymerization initiator. The organotellurium polymerization initiator is not particularly limited as long as one commonly used in living radical polymerization is adopted, and examples include an organotellurium compound and an organotelluride compound. Also in living radical polymerization, the azo compound may also be used as the polymerization initiator, in addition to the organotellurium polymerization initiator, for the purpose of promotion of the polymerization rate.

[Tackifier]

The pressure-sensitive adhesive of the present invention preferably comprises a tackifier in addition to the polymer (X1). The tackifier is comprised to thereby allow the pressure-sensitive adhesive to be enhanced in pressure-sensitive adhesiveness. In addition, adhesiveness to a low-polar adherend, and the like are also easily favorable. Furthermore, for example, the tackifier is comprised so that the glass transition temperature (Tg) is equal to or less than an upper limit value described below, and thus low-temperature attachability is favorable.

Examples of the tackifier include rosin ester-based resins such as a rosin-based resin and a polymerized rosin ester resin, rosin-based tackifiers such as a hydrogenated rosin-based resin, terpene-based tackifiers such as a terpene-based resin and a terpene phenol-based resin, coumarone-indene-based resins, alicyclic saturated hydrocarbon-based resins, C5 petroleum resins, C9 petroleum resins, and C5-C9 copolymerized petroleum resins. Such a tackifying resin may be used singly or in combinations of two or more thereof.

Among those described above, a rosin-based tackifier and a terpene-based tackifier are preferable. Such a tackifier can be easily synthesized from a biological raw material, leading to an easy enhancement in bio rate. For example, the rosin-based tackifier is derived from a natural resin such as a pine resin, and the terpene-based tackifier is derived from a plant essential oil or the like. The tackifier is particularly suitably the rosin-based tackifier. The rosin-based tackifier is used to thereby allow adhesiveness to a low-polar adherend such as a polyolefin-based resin typified by a polypropylene resin to be easily excellent.

The softening point of the tackifier is preferably 120°C or more. The above-mentioned polymer (X1) tends to have a relatively low glass transition temperature and is easily reduced in retention force at high temperature, but can be prevented from being reduced in retention force at high temperature due to combination use with a tackifier having a relatively high softening point. The softening point of the tackifier is more preferably 130°C or more, further preferably

140°C or more from such a viewpoint. The softening point of the tackifier is preferably 165°C or less, more preferably 160°C or less, further preferably 155°C or less, from the viewpoint that appropriate pressure-sensitive adhesion performance is imparted to the pressure-sensitive adhesive. The softening point can be measured according to JIS K2207.

In a case where the pressure-sensitive adhesive comprises the tackifier, the content of the tackifier is not particularly limited, and is preferably 10 to 50 parts by mass based on 100 parts by mass of the polymer (X1). When the content of the tackifier is equal to or more than the lower limit value, low-temperature attachability and adhesiveness to a low-polar adherend are easily favorable. When the content is equal to or less than the upper limit value, retention force under high temperature can be prevented from being deteriorated. The content of the tackifier is more preferably 12 to 40 parts by mass, further preferably 15 to 35 parts by mass, particularly preferably 18 to 30 parts by mass from the above viewpoints.

[Crosslinking agent]

The pressure-sensitive adhesive of the present invention is preferably crosslinked by compounding of a crosslinking agent. In other words, the pressure-sensitive adhesive is preferably a crosslinked product of a pressure-sensitive adhesive composition comprising a crosslinking agent in addition to the polymer (X1), or the polymer (X1) and the tackifier. The pressure-sensitive adhesive may also be crosslinked by, for example, a reaction of the crosslinking agent with the polar group contained in the polymer (X1).

Examples of the crosslinking agent include an isocyanate-based crosslinking agent, an epoxy-based crosslinking agent, an aziridine-based crosslinking agent, and a metallic chelate-based crosslinking agent. In particular, at least one selected from the group consisting of an isocyanate-based crosslinking agent and an epoxy-based crosslinking agent is preferable, and an isocyanate-based crosslinking agent is more preferable.

The isocyanate-based crosslinking agent is not particularly limited as long as it is a compound having two or more isocyanate groups in one molecule, and examples include tolylene diisocyanate, hexamethylene diisocyanate, xylylene diisocyanate, 1,5-naphthalene diisocyanate, diphenylmethane diisocyanate, isophorone diisocyanate, xylene diisocyanate, and a tolylene diisocyanate adduct of trimethylolpropane. In particular, tolylene diisocyanate, and a tolylene diisocyanate adduct of trimethylolpropane are preferable.

Examples of a commercially available product of the isocyanate-based crosslinking agent include various polyisocyanate compounds such as Coronate L-45 and Coronate L-55E (manufactured by Tosoh Corporation), biuret polyisocyanate compounds such as Sumijule N (manufactured by Sumitomo Bayer Urethane Co., Ltd.), polyisocyanate compounds each having an isocyanurate ring, such as Desmodur IL and HL (manufactured by Bayer AG) and Coronate EH (manufactured by Nippon Polyurethane Industry Co., Ltd.), and adduct polyisocyanate compounds such as Sumijule L (manufactured by Sumitomo Bayer Urethane Co., Ltd.), and Coronate L and Coronate HL (manufactured by Nippon Polyurethane Industry Co., Ltd.).

The epoxy-based crosslinking agent is not particularly limited as long as it is a compound having two or more epoxy groups in one molecule, and examples include diglycidyl aniline, diethylene glycol diglycidyl ether, propylene glycol diglycidyl ether, tripropylene glycol diglycidyl ether, 1,6-hexanediol diglycidyl ether, glycerin diglycidyl ether, trimethylolpropane triglycidyl ether, 1,3-bis(N,N-diglycidylaminoethyl)cyclohexane, and N,N,N',N'-tetraglycidyl-m-xylenediamine.

Examples of a commercially available product of the epoxy-based crosslinking agent include E-AX and E-5C (manufactured by Soken Chemical & Engineering Co., Ltd.).

The crosslinking agent may be used singly or in combinations of two or more thereof.

The amount of the crosslinking agent compounded in the pressure-sensitive adhesive may be appropriately modified depending on the type of the polymer (X1) and desired physical properties such as the crosslinking degree, and is, for example, 0.1 to 20 parts by mass, preferably 0.4 to 8 parts by mass, more preferably 0.7 to 4 parts by mass based on 100 parts by mass of the polymer (X1).

(Crosslinking degree)

The crosslinking degree of the pressure-sensitive adhesive of the present invention is preferably 10 to 70%. When the crosslinking degree is in the above range, retention force under high temperature, low-temperature attachability, adhesiveness to a low-polar adherend, and the like are easily favorable. The crosslinking degree of the pressure-sensitive adhesive is more preferably 20% or more, further preferably 30% or more, and preferably 60% or less, further preferably 50% or less from such a viewpoint. The crosslinking degree of the pressure-sensitive adhesive is represented as a gel fraction, and the measurement method thereof is as described in Examples. The crosslinking degree of the pressure-sensitive adhesive can be appropriately adjusted by modifying, for example, the amount of the crosslinking agent compounded.

[Other additive(s)]

The pressure-sensitive adhesive of the present invention may comprise, when necessary, additive(s) such as a silane coupling agent, an antioxidant, an ultraviolet inhibitor, a plasticizer, an emulsifier, a softener, a filler, a pigment, and/or a dye. A biological material is preferably selected for such additive(s) as much as possible from the viewpoint of an increase in bio rate.

<Storage elastic modulus>

(Tan δ (23°C))

The pressure-sensitive adhesive of the present invention has the tan δ (23°C) of 0.8 to 1.3, wherein the tan δ (23°C) is represented by G" (23°C)/G' (23°C), the storage elastic modulus at 23°C is represented by G' (23°C) and the loss elastic modulus at 23°C is represented by G" (23°C). When the tan δ (23°C) is less than 0.8 or more than 1.3, it is difficult to satisfy all retention force under high temperature, low-temperature attachability, and adhesiveness to a low-polar adherend such as a polyolefin resin. The tan δ (23°C) is preferably 0.85 or more, more preferably 0.88 or more, and preferably 1.2 or less, more preferably 1.1 or less, further preferably 1.0 or less from such a viewpoint.

The tan δ (23°C) can be adjusted by, for example, the type and the amount of the monomer component for use in the polymer (X1), and the tan δ (23°C) tends to be increased by, for example, adopting straight $R^2$ and $R^3$ in the formulae (1) and (2) of the monomers (A1) and (B1) and/or decreasing the values of n and m. The tan δ (23°C) is also easily adjusted in a desired range by adjusting compounding of the tackifying resin and the monomer component and setting the glass transition temperature (Tg) in the range from -255 to 15°C. The tan δ (23°C) can also be adjusted by the molecular weight of the polymer (X1), and, for example, the value thereof tends to be smaller in the case of a lower molecular weight of the polymer (X1).

(Storage elastic modulus at 23°C)

The log G' (23°C) [Pa] is preferably 4.8 to 5.5, wherein the storage elastic modulus at 23°C is represented by G' (23°C). The log G' (23°C) [Pa], which is in the above range, thus allows pressure-sensitive adhesion properties under ordinary temperature to be enhanced and, for example, allows adhesiveness to a low-polar adherend under ordinary temperature to be easily favorable. The log G' (23°C) [Pa] is more preferably 4.85 to 5.4, further preferably 4.9 to 5.3 from such a viewpoint.

(Storage elastic modulus at 80°C)

The log G' (80°C) [Pa] is preferably 4.1 to 4.8, wherein the storage elastic modulus at 80°C is represented by G' (80°C). The log G' (80°C) [Pa], which is in the above range, thus allows, for example, cohesion force under high temperature to be favorable and can allow pressure-sensitive adhesiveness and retention force under high temperature to be enhanced. The log G' (80°C) [Pa] is more preferably 4.15 to 4.75, further preferably 4.2 to 4.7 from such a viewpoint.

(Storage elastic modulus at 0°C)

The log G' (0°C) [Pa] is preferably 5.0 to 6.5, wherein the storage elastic modulus at 0°C is represented by G' (0°C). The log G' (0°C) [Pa], which is in the above range, thus allows low-temperature attachability to be easily favorable. The log G' (0°C) [Pa] is more preferably 5.4 to 6.4, further preferably 5.5 to 6.3 from such a viewpoint.

The log G' (0°C) [Pa] means the logarithm of the storage elastic modulus represented by the unit "Pa". Other similar designations also have the same meaning.

The respective storage elastic moduli G' at 0°C, 23°C and 80°C can be adjusted by, for example, the type and the amount of the monomer component for use in the polymer (X1), and are easily adjusted in the above ranges by, for example, setting the types and the contents of the monomer (A1) and the monomer (B1) as described above. The storage elastic modulus G' at each temperature can also be adjusted by the weight-average molecular weight and the crosslinking degree, and, for example, when the weight-average molecular weight or the crosslinking degree is higher, the storage elastic modulus G' at each temperature tends to be higher. The storage elastic modulus G' can also be adjusted by the molecular weight distribution. For example, the storage elastic modulus G' tends to be increased when the molecular weight distribution is narrow, and the storage elastic modulus G' tends to be decreased when the molecular weight distribution is broad.

(Glass transition temperature (Tg))

The glass transition temperature (Tg) of the pressure-sensitive adhesive of the present invention is preferably 15°C or less. When the Tg is 15°C or less, the tan δ (23°C) is easily high, and retention force under high temperature, low-temperature attachability, and the like are also easily favorable. The glass transition temperature (Tg) is preferably 10°C or less, more preferably 5°C or less from such a viewpoint. The glass transition temperature (Tg) of the pressure-sensitive adhesive is not particularly limited, and is, for example, -40°C or more, preferably -28°C or more, more preferably -25°C or more, further preferably - 20°C or more, for example, from the viewpoint of an enhancement in retention force under high temperature.

The glass transition temperature (Tg) can be adjusted by the type(s) and the amount(s) of the monomer(s) constituting the polymer (X1). The glass transition temperature (Tg) can also be adjusted by the type, the amount and/or the like of the tackifier, and is easily increased by, for example, using one having a high softening point, as the tackifier, and/or increasing the amount of the tackifier. The glass transition temperature (Tg) can also be adjusted by addition of a fine particle or the like.

The storage elastic modulus G' and the loss elastic modulus G" at each temperature are each a value obtained by measurement with a polymer dynamic viscoelastic measurement apparatus in measurement conditions described in Examples below. The tan δ (23°C) is a value determined from the storage elastic modulus G' (23°C) and the loss elastic modulus G" (23°C), measured at 23°C. The glass transition temperature (Tg) is measured with a polymer dynamic viscoelastic measurement apparatus in measurement conditions described in Examples below.

(Bio rate)

The content rate of biological carbon (hereinafter, also referred to as "bio rate") of the pressure-sensitive adhesive of the present invention is preferably 40% by mass or more. A general target for a "bio-based product" is a bio rate of 40% by mass or more. Bio-based products can save petroleum resources by use of renewable organic resources, can reduce the amount of emission of carbon dioxide due to combustion of petroleum-derived products, and can reduce the burden on the environment. The bio rate is more preferably 50% by mass or more, further preferably 60% by mass or more from such viewpoints. The bio rate is more preferable as it is higher, and may be 100% by mass or less.

While biological carbon contains a radioisotope (C-14) at a certain proportion, petroleum-derived carbon contains almost no C-14. Thus, the bio rate can be calculated with measurement of the concentration of C-14 contained in the pressure-sensitive adhesive or a pressure-sensitive adhesive tape described below. Specifically, the measurement can be made according to ASTM D6866 as a standard utilized in many bioplastic industries.

(Tackiness value)

The peeling limit value at 23°C of a pressure-sensitive adhesive tape, measured in a tackiness test, is preferably 400 gf·s or more in the pressure-sensitive adhesive of the present invention. The tackiness test is performed as follows.

First, a pressure-sensitive adhesive tape is put on a plate set at 23°C in a tackiness tester (for example, TAC-1000 manufactured by Rhesca Co., Ltd.) so that a pressure-sensitive adhesive layer turns up. Herein, a surface of the pressure-sensitive adhesive tape, not to be subjected to measurement, is lined by a film such as a polyethylene terephthalate (PET) film. Next, a cylindrical stainless probe having a diameter of 5 mm is pressed onto the pressure-sensitive adhesive tape at a probe temperature of 23°C, a pressing speed of 2 mm/s and a pressing load of 100 gf, and retained in this state for 0.1 seconds. Thereafter, the probe is pulled at a pulling speed of 0.2 mm/s. The force here applied to the pressure-sensitive adhesive tape is measured.

While the above description is made with, as an example, a case where the pressure-sensitive adhesive forms the pressure-sensitive adhesive tape, the pressure-sensitive adhesive may be placed and subjected to the same measurement on the plate set at 23°C in the tackiness tester also in a case where no pressure-sensitive adhesive tape is formed.

The peeling limit value means an integration value from time $T_1$ representing a force of zero to the time representing a maximum force (peak top) in a force-time curve illustrating the force applied to the pressure-sensitive adhesive tape at 23°C, measured in the tackiness test. In the tackiness test, the probe is pressed onto the pressure-sensitive adhesive tape, to thereby result in lowering of the force-time curve, and thereafter the probe is started to be pulled, to thereby result in rise of the force-time curve. The integration value from time $T_1$ representing a force of zero to time $T_2$ representing the maximum force (peak top) is calculated, and defined as the peeling limit value.

The peeling limit value is adjusted in the above range, and thus the pressure-sensitive adhesive tape can be inhibited from being peeled even under high-temperature and high-humidity and under a situation where a restoring force is applied. A preferable lower limit of the peeling limit value is 450 gf·s, and a more preferable lower limit thereof is 500 gf·s. The upper limit of the peeling limit value is not particularly limited.

(Production of pressure-sensitive adhesive)

The pressure-sensitive adhesive of the present invention may be formed from, for example, a pressure-sensitive adhesive composition prepared. The pressure-sensitive adhesive composition comprises components for forming the pressure-sensitive adhesive, and specifically comprises a tackifier, a crosslinking agent, other additive(s) and/or the like when necessary compounded, in addition to the polymer (X1). The pressure-sensitive adhesive composition may be diluted with a diluting solution such as an organic solvent or the like. The diluting solution may be the solvent used in synthesis of the polymer (X1), or one added after synthesis of the polymer (X1).

The pressure-sensitive adhesive composition may be crosslinked by, when necessary, heating, drying and/or the like and formed into the pressure-sensitive adhesive. The pressure-sensitive adhesive is usually used in, for example, a pressure-sensitive adhesive tape, and may form a pressure-sensitive adhesive layer.

<Pressure-sensitive adhesive tape>

The pressure-sensitive adhesive tape of the present invention is a pressure-sensitive adhesive tape comprising a pressure-sensitive adhesive layer comprising the pressure-sensitive adhesive. The pressure-sensitive adhesive tape may be a non-support tape comprising no base material or may be a pressure-sensitive adhesive tape comprising a base material, and is preferably a pressure-sensitive adhesive tape comprising a base material. The pressure-sensitive adhesive tape may be herein sometimes referred to as "pressure-sensitive adhesive sheet" as described below.

The non-support tape is a double sided pressure-sensitive adhesive tape comprising no base material and being used in the form of a single pressure-sensitive adhesive layer. The pressure-sensitive adhesive tape comprising a base material comprises a base material and a pressure-sensitive adhesive layer provided on at least one surface of the base material. In this case, the pressure-sensitive adhesive tape, in which the pressure-sensitive adhesive layer is provided on each of both surfaces of the base material, may be used as a double sided pressure-sensitive adhesive tape, or the pressure-sensitive adhesive tape, in which the pressure-sensitive adhesive layer is provided on only one surface of the base material, may be used as a pressure-sensitive adhesive single coated tape. A surface exposed of the pressure-sensitive adhesive layer in each of such pressure-sensitive adhesive tapes may be protected by appropriately attaching a release sheet. The release sheet, in which at least one surface of a base material of the release sheet is coated with a release agent, serves as a release surface, and may be attached so that the release surface is in contact with the pressure-sensitive adhesive layer.

In the case of a double sided pressure-sensitive adhesive tape comprising the pressure-sensitive adhesive layer on each of both surfaces of the base material, at least one of such pressure-sensitive adhesive layers may be formed by the pressure-sensitive adhesive of the present invention.

[Base material]

The base material used in the pressure-sensitive adhesive tape is not particularly limited, and is preferably any of a resin film, a non-woven cloth or a foam.

Specific examples of a resin component constituting the resin film include poly esters (PES) such as polyethylene terephthalate (PET), polyethylene furanoate (PEF), polylactate (PLA), polytrimethylene terephthalate (PTT), polybutylene terephthalate (PBT) and polybutylene succinate (PBS), polyolefins such as polyethylene (PE), polypropylene (PP) and an ethylene/vinyl acetate copolymer (EVA), polyurethane (PU), triacetylcellulose (TAC), and polyamide (PA). The resin component may be used singly or in combinations of two or more thereof. The resin film is in particular preferably a polyethylene terephthalate film (PET film). A PET film is favorable in mechanical strength, and can appropriately support the pressure-sensitive adhesive layer. A PET film, which is a product high in bio rate, is commercially available, and the pressure-sensitive adhesive tape is also easily high in bio rate.

The non-woven cloth may be a non-woven cloth comprising a resin component, or may be a non-woven cloth using a fiber of pulp or the like other than a resin component. Such a non-woven cloth using a fiber other than a resin component may be formed singly from such a fiber other than a resin component, or may be formed from both such a fiber other than a resin component and a resin fiber. The resin component here used may be appropriately selected from, for example, those listed as the resin component constituting the resin film. A non-woven cloth using pulp, which is a product high in bio rate, is commercially available, and the pressure-sensitive adhesive tape is also easily high in bio rate.

In a case where a foam is used as the base material, examples of the foam include a polyolefin resin foam with a polyolefin resin such as PE, PP or EVA as a resin component, and a polyurethane foam with a polyurethane resin.

The respective resin components constituting the resin film, the non-woven cloth and the foam, here used, may be each any of, for example, a petroleum-derived resin, a plant or animal-derived resin, and a resin derived from both petroleum and plants or animals, and each preferably comprise at least a plant or animal-derived resin in order that the

pressure-sensitive adhesive tape is a bio-based product. For example, in a case where the base material is a PET film, plant or animal-derived PET may be used. In a case where a polyolefin resin foam or the like is used as the base material, a plant or animal-derived resin may be used in the polyolefin resin constituting the foam.

The thickness of the base material in such each pressure-sensitive adhesive tape is not particularly limited, and may be, for example, 1 to 2000 μm. A suitable range of the thickness of the base material differs depending on the type of the base material used, and is preferably 1 to 100 μm, more preferably 5 to 50 μm in a case where the base material is, for example, the resin film or the non-woven cloth. The thickness of the base material is 5 to 100 μm, and thus certain mechanical strength can be imparted to the pressure-sensitive adhesive tape without loss of any flexibility.

In a case where the base material is the foam, the thickness of the base material is preferably 50 to 2000 μm. The thickness, which is in the above range, thus allows high impact resistance to be exhibited, but also can allow high flexibility for tight adhesion and bonding according to the shape of an adherend to be exhibited.

The thickness of the pressure-sensitive adhesive layer in such each pressure-sensitive adhesive tape is not particularly limited, and may be, for example, about 5 to 200 μm and is preferably 10 to 100 μm. When the thickness of the pressure-sensitive adhesive layer is in the above range, the resulting pressure-sensitive adhesive tape can exhibit sufficient pressure-sensitive adhesion force.

The total thickness (total thickness of the base material and the pressure-sensitive adhesive layer) of such each pressure-sensitive adhesive tape is preferably 10 to 400 μm. When the total thickness of such each pressure-sensitive adhesive tape is in the above range, the resulting pressure-sensitive adhesive tape can exhibit sufficient pressure-sensitive adhesion force.

(Cohesion force)

The amount of slippage at 23°C of the pressure-sensitive adhesive tape of the present invention, measured by a cohesion force test, is preferably 500 μm or less, more preferably 400 μm or less, further preferably 300 μm or less, particularly preferably 250 μm or less. The amount of slippage at 80°C in the pressure-sensitive adhesive of the present invention, measured by a cohesion force test, is preferably 1200 μm or less, more preferably 1000 μm or less, further preferably 800 μm or less. When the respective amounts of slippage at 23°C and 80°C are small as described above, the cohesion force in the pressure-sensitive adhesive layer is increased, and each retention force under ordinary temperature and under high temperature is enhanced.

The amount of slippage here means the amount of slippage generated in action of a predetermined load in a shearing direction for 3 minutes, and the detailed method for measurement is described below.

The proportion of the amount of slippage after removal of a load acting in a shearing direction for 3 minutes as described above and then recovery (amount of slippage after load removal), relative to the amount of slippage after action of the load (amount of slippage before load removal), is defined as the recovery rate (%) of slippage displacement. The recovery rate (%) of slippage displacement is preferably 50% or less, more preferably 40% or less, further preferably 30% or less, and preferably 5% or more, more preferably 10% or more, further preferably 15% or more. When the recovery rate is in the above range, conformability to an adherend in compression bonding of the pressure-sensitive adhesive tape is improved, and attachability and pressure-sensitive adhesion force are enhanced.

The amount of slippage can be measured by a cohesion force test with a micro-shear slippage displacement measurement tester (shear creep measurement apparatus, NST1, manufactured by Asahi Seiko Co., Ltd.) illustrated in Fig. 1. Specifically, the measurement is as follows.

First, a release sheet on one surface of the double sided pressure-sensitive adhesive tape serving as a test object is released, and a polyethylene terephthalate (PET) film subjected to a corona treatment is attached on a surface exposed of one pressure-sensitive adhesive layer of the double sided pressure-sensitive adhesive tape. Thereafter, the resultant is cut to a size of a width of 1 cm and a length of 12 cm to thereby provide a test piece 5. A temperature controller 4 in the apparatus is set at 23°C or 80°C, and left to still stand until stabilization at a set temperature. The temperature controller 4 may be an appropriate combination of two or more temperature controllers.

Another release sheet of the test piece 5 is released and removed from an end thereof by about 3 cm, and an exposed pressure-sensitive adhesive layer is attached to an adherend 3 so that the adhesion area is 5 mm × 20 mm. A portion of a release sheet 8, other than an end thereof, is here still attached to a pressure-sensitive adhesive layer 7. Other exposed surface of the pressure-sensitive adhesive layer 7 of the test piece 5 is attached to the adherend 3 so that the adhesion area is 5 mm × 20 mm. The adherend 3 is made of SUS.

A quartz block 2 (quartz glass onto which chromium is deposited) whose edge is subjected to a mirror treatment is put onto a surface for attachment. A mirror-treated surface 10 on the edge of the block 2 is so as to be irradiated with laser light from a laser interferometer 1 (for example, "SI-F1" manufactured by Keyence Corporation).

The test piece 5 is fixed to a wire connected to a 200-g weight 6 and left to still stand as it is, to thereby uniformize the temperature for 5 minutes. The load of the weight 6 is applied to the test piece 5 5 minutes later, to provide shear loading in a horizontal direction to the test piece 5. The displacement of the block 2 on the test piece 5 is detected by

the laser interferometer 1 at 3 minutes after application of the load, and the value detected is defined as the amount of slippage of the pressure-sensitive adhesive.

The load is applied as described above and the load is removed after a lapse of 3 minutes, and the amount of slippage (after load removal) after an additional lapse of 3 minutes after load removal is measured and the amount of slippage measured before load removal as described above is adopted as the amount of slippage (before load removal), to thereby determine "Amount of slippage (after load removal)/Amount of slippage (before load removal) × 100(%)" as the recovery rate (%) of slippage displacement. The amount of slippage (after load removal) is here measured with the laser interferometer 1 in the same manner as in the amount of slippage (before load removal). A specific calculation method of the recovery rate (%) of slippage displacement is as follows.

Recovery rate (%) of slippage displacement = (Slippage displacement (μm) 3 minutes after load removal)/(Slippage displacement (μm) 3 minutes after load application) × 100

While the above description relates to the method for measuring the amount of slippage in the double sided pressure-sensitive adhesive tape, the method for measuring the amount of slippage in the pressure-sensitive adhesive single coated tape may be also performed in the same manner except that attachment of a PET film on one surface of the pressure-sensitive adhesive layer is omitted. The double sided pressure-sensitive adhesive tape, even when is in the form of a non-support tape comprising no base material, can be subjected to the same measurement. The double sided pressure-sensitive adhesive tape, if comprises no release sheet attached onto the pressure-sensitive adhesive layer, may be subjected to the same measurement with the release step and the like omitted.

(Bio rate in pressure-sensitive adhesive tape)

The bio rate in the pressure-sensitive adhesive tape of the present invention is preferably 40% by mass or more, more preferably 50% by mass or more, further preferably 60% by mass or more from the same viewpoint as in the pressure-sensitive adhesive described above. The bio rate is more preferable as it is higher, and may be 100% by mass or less. The bio rate in the pressure-sensitive adhesive tape generally differs depending on each constituent member (for example, pressure-sensitive adhesive layer and base material). Thus, the bio rate may be calculated by determining the bio rate in such each constituent member and determining the weighted average with the mass of such each constituent member as weighing.

(Method for producing pressure-sensitive adhesive tape)

The method for producing the pressure-sensitive adhesive tape is not particularly limited, and a conventionally known method can be adopted. For example, first, a pressure-sensitive adhesive layer may be formed by preparing a pressure-sensitive adhesive composition, when necessary, diluted with an organic solvent or the like, coating a support such as a release sheet with the pressure-sensitive adhesive composition, and, when necessary, heating and drying the resultant. In a case where the release sheet is coated with the pressure-sensitive adhesive composition, a release surface of the release sheet may be coated therewith. The pressure-sensitive adhesive layer formed on the support such as the release sheet is further bonded to a base material, and thus a pressure-sensitive adhesive tape comprising the base material is obtained. Alternatively, a base material may also be directly coated with the pressure-sensitive adhesive composition and, when necessary, heated and dried, and thus a pressure-sensitive adhesive tape in which a pressure-sensitive adhesive layer is provided on the base material may be obtained.

In a case where a double sided pressure-sensitive adhesive tape is made, a pressure-sensitive adhesive layer may be formed on each of both surfaces of a base material according to any of the above methods.

In a case where a non-support tape is produced, the non-support tape can be obtained by coating a release sheet with the pressure-sensitive adhesive composition and, when necessary, heating and drying the resultant to thereby form a pressure-sensitive adhesive layer. In this case, a release sheet may be further bonded onto the pressure-sensitive adhesive layer formed, to protect the pressure-sensitive adhesive layer. The non-support tape, in which the pressure-sensitive adhesive layer is released from the release sheet, may be used.

(Application of pressure-sensitive adhesive)

The pressure-sensitive adhesive and the pressure-sensitive adhesive tape of the present invention are not particularly limited with respect to applications thereof, and are preferably used in electrical appliance and/or vehicle applications. For example, in an electrical appliance application, use for securing a part constituting an electrical appliance is preferable. Specifically, in an electrical appliance, such parts may be mutually secured by the pressure-sensitive adhesive or the pressure-sensitive adhesive tape. Accordingly, the present invention also provides an electrical appliance comprising the pressure-sensitive adhesive or the pressure-sensitive adhesive tape. The electrical appliance is not particularly limited, and examples include respective displays for mobile electronics, televisions, and the like, a washing

machine, a refrigerator, a dishwasher, a sweeper, a printer, and various audio instruments.

In a vehicle application, for example, use for securing an on-board member is preferable. Examples of the on-board member include an interior material for vehicles, and examples include on-board panels such as a ceiling panel, a door panel and an instrument panel, and a car air-conditioner, a door trim, a vibration-damping member, an emblem, a decorative film and a water sealing member. The on-board member may be secured to a vehicle, for example, with the pressure-sensitive adhesive or the pressure-sensitive adhesive tape being interposed therebetween. Accordingly, the present invention also provides an on-board member comprising the pressure-sensitive adhesive or the pressure-sensitive adhesive tape.

While the interiors of an electrical appliance and a vehicle may be exposed to high temperature, the pressure-sensitive adhesive of the present invention exhibits high retention force even under a high-temperature environment, and can stably secure a part for electrical appliances and an on-board member. In this regard, while each assembling of an electrical appliance and a vehicle may be performed in cold climates, the pressure-sensitive adhesive or the pressure-sensitive adhesive tape can be easily attached onto a part for electrical appliances or an on-board member even when such assembling is performed in cold climates, and thus assembling properties are favorable. Furthermore, while, for example, a part for electrical appliances, or an on-board member is formed from, for example, a polyolefin-based resin typified by a polypropylene resin and thus may be low in polarity, such a part or such an on-board member, even when is low in polarity, can be attached at high adhesion force by use of the pressure-sensitive adhesive or the pressure-sensitive adhesive tape of the present invention.

«Second invention»

Hereinafter, a second invention of the present invention is described in detail with reference to embodiments.

[Pressure-sensitive adhesive sheet]

The pressure-sensitive adhesive sheet of the present invention comprises a pressure-sensitive adhesive comprising a plant-derived component. For example, a polymer (X2) comprised in the pressure-sensitive adhesive, described below, may comprise a plant-derived monomer component as a constituent unit. A component other than the polymer (X2), such as a tackifier, may also comprise a plant-derived component. When no pressure-sensitive adhesive comprising a plant-derived component is comprised, it is difficult to increase the bio rate in the pressure-sensitive adhesive sheet.

(Pressure-sensitive adhesive)

In the pressure-sensitive adhesive sheet of the present invention, the peak top molecular weight (Mtp) of the sol content of the pressure-sensitive adhesive, according to gel permeation chromatography (GPC), is 137000 or more and 300000 or less, the sol fraction ($R_{sol}$) in the pressure-sensitive adhesive is 90% by mass or less, and the glass transition temperature (Tg) of the pressure-sensitive adhesive is 5°C or less. Thus, not only the bio rate in the pressure-sensitive adhesive sheet can be high and low-temperature attachability can be favorable, but also both retention force under high temperature and adhesiveness to a low-polar adherend can be favorable.

<Peak top molecular weight (Mtp) of sol content>

The peak top molecular weight (Mtp) of the sol content of the pressure-sensitive adhesive of the pressure-sensitive adhesive sheet of the present invention, according to GPC, is 137000 or more and 300000 or less. When the peak top molecular weight is less than 137000, retention force under high temperature and adhesiveness to a low-polar adherend may be deteriorated. When the peak top molecular weight is more than 300000, adhesiveness to a low-polar adherend may be deteriorated. The peak top molecular weight is preferably 138000 or more and 220000 or less, more preferably 138000 or more and 200000 or less from such viewpoints. The peak top molecular weight of the sol content of the pressure-sensitive adhesive, according to GPC, is the molecular weight value at the peak top in a molecular weight distribution obtained by GPC measurement, and can be measured by a method described in Examples below. The peak top molecular weight (Mtp) of the sol content, according to GPC, is here the peak top molecular weight of the sol content of the polymer as a main component, according to GPC, and the peak derived from the tackifier (TF) is here excluded.

The peak top molecular weight of the sol content of the pressure-sensitive adhesive, according to GPC, can be adjusted by modifying the molecular weight and the molecular weight distribution of the polymer constituting the pressure-sensitive adhesive, by a polymerization method, modifying the amount of a crosslinking agent compounded, and/or compounding a low-molecular weight component such as an oligomer.

<Sol fraction ($R_{sol}$)>

The sol fraction ($R_{sol}$) in the pressure-sensitive adhesive of the pressure-sensitive adhesive sheet of the present invention is 90% by mass or less. When the sol fraction ($R_{sol}$) in the pressure-sensitive adhesive is more than 90% by mass, retention force under high temperature may be deteriorated. The sol fraction ($R_{sol}$) in the pressure-sensitive adhesive of the pressure-sensitive adhesive sheet of the present invention is preferably 45% by mass or more and 75% by mass or less. When the sol fraction ($R_{sol}$) is 45% by mass or more, adhesiveness to a low-polar adherend can be further improved along with a high bio rate. When the sol fraction ($R_{sol}$) is 75% by mass or less, retention force under high temperature can be further improved along with a high bio rate.

The sol fraction ($R_{sol}$) is more preferably 50% by mass or more and 70% by mass or less, further preferably 55% by mass or more and 70% by mass or less, still further preferably 58% by mass or more and 70% by mass or less from such viewpoints. The sol fraction ($R_{sol}$) can be measured by a method described in Examples below. The sol fraction ($R_{sol}$) can be adjusted by modifying the molecular weight and the molecular weight distribution of the polymer constituting the pressure-sensitive adhesive, by a polymerization method, modifying the amount of a crosslinking agent compounded, and/or compounding a low-molecular weight component such as an oligomer.

<glass transition temperature (Tg)>

The glass transition temperature (Tg) of the pressure-sensitive adhesive of the pressure-sensitive adhesive sheet of the present invention is 5°C or less. When the glass transition temperature (Tg) is more than 5°C, low-temperature attachability may be deteriorated. The glass transition temperature (Tg) is preferably 2.5°C or less, more preferably 0°C or less, further preferably -1°C or less from such a viewpoint. The upper limit value of the range of the glass transition temperature (Tg) is not particularly limited, and is preferably -20°C or more, more preferably -18°C or more, further preferably -17°C or more, for example, from the viewpoint of an enhancement in retention force under high temperature. The glass transition temperature (Tg) can be measured by a method described in Examples below. The glass transition temperature (Tg) can be adjusted by the type(s) and the amount(s) of the monomer(s) constituting the polymer of the pressure-sensitive adhesive. The glass transition temperature (Tg) can also be adjusted by the type, the amount and/or the like of the tackifier, and is easily increased by, for example, using one having a high softening point, as the tackifier, and/or increasing the amount of the tackifier. The glass transition temperature (Tg) can also be adjusted by addition of a fine particle or the like.

<Degree of softness (S)>

The degree of softness (S) represented by the following general expression (3), of the pressure-sensitive adhesive of the pressure-sensitive adhesive sheet of the present invention, is preferably 50000 or more and 180000 or less. The degree of softness (S) is a parameter which represents softness of the pressure-sensitive adhesive. When the degree of softness (S) is in such a predetermined range, the pressure-sensitive adhesive is not too soft and not too hard, and exhibits excellent pressure-sensitive adhesion performance:

$$S = Mw \times R_{sol}/D \qquad (3)$$

wherein Mw represents the weight-average molecular weight of the sol content of the pressure-sensitive adhesive, according to GPC, $R_{sol}$ represents the sol fraction in the pressure-sensitive adhesive, and D represents the dispersivity of the sol content of the pressure-sensitive adhesive, according to GPC.

When the degree of softness (S) is 50000 or more, retention force under high temperature and adhesiveness to a low-polar adherend can be further favorable along with a high bio rate. When the degree of softness (S) is 180000 or less, retention force under high temperature can be further favorable along with a high bio rate. The degree of softness (S) is more preferably 55000 or more and 120000 or less, further preferably 60000 or more and 112000 or less from such viewpoints. The degree of softness (S) can be measured by a method described in Examples below. The degree of softness (S) can be adjusted by modifying the molecular weight and the molecular weight distribution of the polymer constituting the pressure-sensitive adhesive, by a polymerization method, modifying the amount of a crosslinking agent compounded, and/or compounding a low-molecular weight component such as an oligomer.

<Dispersivity (D)>

The dispersivity (D) of the sol content of the pressure-sensitive adhesive of the pressure-sensitive adhesive sheet of the present invention, according to GPC, is preferably 1.6 or more and less than 3. When the dispersivity (D)

is 1.6 or more, adhesiveness to a low-polar adherend can be further favorable along with a high bio rate. When the dispersivity (D) is less than 3, retention force under high temperature can be further favorable along with a high bio rate. The dispersivity (D) is more preferably 1.8 or more and less than 3, further preferably 1.9 or more and less than 3, still further preferably 2.0 or more and less than 3 from such viewpoints. The dispersivity (D) can be measured by a method described in Examples below. The dispersivity (D) of the sol content, according to GPC, is the dispersivity of the sol content of the polymer as a main component, according to GPC, and the molecular weight at the peak derived from the tackifier (TF) is here excluded.

The dispersivity (D) can be adjusted by modifying the molecular weight of the polymer constituting the pressure-sensitive adhesive, by a polymerization method, modifying the amount of a crosslinking agent compounded, and/or compounding a low-molecular weight component such as an oligomer.

<Weight-average molecular weight (Mw)>

The weight-average molecular weight (Mw) of the sol content of the pressure-sensitive adhesive of the pressure-sensitive adhesive sheet of the present invention, according to GPC, is preferably 190000 or more and 700000 or less. When the weight-average molecular weight (Mw) is 190000 or more and 700000 or less, retention force under high temperature and adhesiveness to a low-polar adherend can be further improved along with a high bio rate. The weight-average molecular weight (Mw) is more preferably 200000 or more and 600000 or less, further preferably 220000 or more and 550000 or less, still further preferably 240000 or more and 460000 or less from such a viewpoint. The weight-average molecular weight (Mw) can be measured by a method described in Examples below. The weight-average molecular weight (Mw) of the sol content, according to GPC, is the weight-average molecular weight of the sol content of the polymer as a main component, according to GPC, and the molecular weight at the peak derived from the tackifier (TF) is here excluded.

The weight-average molecular weight (Mw) can be adjusted by modifying the molecular weight and the molecular weight distribution of the polymer constituting the pressure-sensitive adhesive, by a polymerization method, modifying the amount of a crosslinking agent compounded, and/or compounding a low-molecular weight component such as an oligomer.

<Bio rate>

The content rate of biological carbon (hereinafter, also referred to as "bio rate") in the pressure-sensitive adhesive of the pressure-sensitive adhesive sheet of the present invention is preferably 51% by mass or more. A bio rate of 51% by mass or more can allow the pressure-sensitive adhesive to be a "bio-based product". Such bio-based products can save petroleum resources by use of renewable organic resources, can reduce the amount of emission of carbon dioxide due to combustion of petroleum-derived products, and can reduce the burden on the environment. The bio rate is more preferably 55% by mass or more, further preferably 60% by mass or more from such viewpoints. The bio rate is more preferable as it is higher, and may be 100% by mass or less. The method for measuring the bio rate is described in the section of the first invention, and thus the description thereof is omitted.

<Polymer (X2)>

The pressure-sensitive adhesive of the pressure-sensitive adhesive sheet of the present invention preferably comprises a polymer (X2). The polymer (X2) contains a constituent unit derived from at least one monomer (Y2) selected from the group consisting of a monomer (A2) represented by the following general formula (4) and a monomer (B2) represented by the following general formula (5). Herein, the term "monomer (Y2)" is also used for collectively describing the monomer (A2) and the monomer (B2).

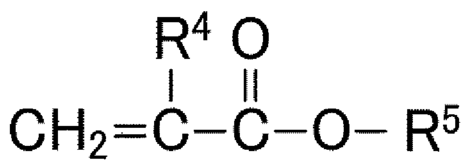

(4)

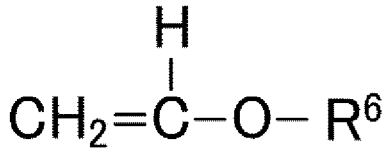

(5)

In the formula (4), $R^4$ represents H or $CH_3$, $R^5$ represents $-C_nH_{2n+1}$ and n represents an integer of 7 to 20. In the formula (5), $R^6$ represents - $C(=O)C_mH_{2m+1}$ and m represents an integer of 6 to 13. The monomer (A2) represented by the general formula (4) is different from the monomer (A1) represented by the general formula (1) in that n represents an integer of 7 to 20, and the monomer (B2) represented by the general formula (5) is the same as the monomer (B1) represented by the general formula (2).

In the present invention, at least any of the constituent units derived from the monomer (A2) and the monomer (B2) is contained, and thus retention force under high temperature, low-temperature attachability, and adhesiveness to a low-polar adherend are easily favorable. The monomer (A2) and the monomer (B2) are each easily produced from a biological raw material, and a bio rate described below is easily increased.

The polymer (X2) may contain constituent unit(s) derived from one monomer or both monomers of the monomer (A2) and the monomer (B2), and preferably contains a constituent unit derived from the monomer (A2). When the polymer (X2) contains the constituent unit derived from the monomer (A2), retention force under high temperature, low-temperature attachability, and adhesiveness to a low-polar adherend are easily favorable.

The alkyl group ($-C_nH_{2n+1}$) as $R^5$ in the formula (4) and the alkyl group ($-C_mH_{2m+1}$) in $R^6$ in the formula (4) may be each straight or branched, and are each suitably straight from the viewpoints of retention force under high temperature, low-temperature attachability, and adhesiveness to a low-polar adherend. In addition, n in $R^5$ is preferably 7 to 18, more preferably 7 to 14, further preferably 7 from the viewpoint that retention force under high temperature, low-temperature attachability, and adhesiveness to a low-polar adherend are easily favorable. $R^4$ in the formula (4) is preferably H from the viewpoint that pressure-sensitive adhesion performance is favorable.

Accordingly, the polymer (X2) preferably contains a constituent unit derived from a monomer (A2) where n is 7 to 18 and $R^5$ is straight in the general formula (4), more preferably contains a constituent unit derived from a monomer (A2) where n is 7 and $R^5$ is straight in the formula, and $R^4$ in such a monomer (A2) here adopted is further preferably H.

Specific examples of the monomer (A2) include n-heptyl (meth)acrylate, n-octyl (meth)acrylate, lauryl (meth)acrylate, n-decyl (meth)acrylate, 2-octyl (meth)acrylate, n-nonyl (meth)acrylate, n-undecyl (meth)acrylate, n-tetradecyl (meth)acrylate (myristyl (meth)acrylate), and n-octadecyl (meth)acrylate. The monomer (A2) may be used singly or in combinations of two or more thereof.

Specific examples of the monomer (B2) include vinyl caprate, vinyl laurate, vinyl caprylate, and vinyl nonanoate. The monomer (B2) may be used singly or in combinations of two or more thereof.

Among the above-mentioned monomers (A2) and (B2), n-heptyl (meth)acrylate, n-tetradecyl (meth)acrylate and n-octadecyl (meth)acrylate are preferable, and in particular n-heptyl (meth)acrylate is more preferable and n-heptyl acrylate is further preferable. When n-heptyl (meth)acrylate, n-tetradecyl (meth)acrylate, and n-octadecyl (meth)acrylate are each used, retention force under high temperature, low-temperature attachability, and adhesiveness to a low-polar adherend are easily enhanced.

The "(meth)acrylate" is herein used as a term meaning one of or both acrylate and methacrylate, and much the same is true on other similar terms.

$R^5$ and $R^6$ in the general formulae (4) and (5) are each preferably biological, particularly vegetable carbon. $R^5$ and $R^6$ can be biological carbon to allow a bio rate described below to be high. The monomers (A2) and (B2), in which $R^5$ and $R^6$ are each biological carbon, can be inexpensively and easily available by adopting a saturated fatty acid or an unsaturated fatty acid collected from an animal, a plant or the like, as a raw material, and converting such a fatty acid into an alcohol or an ester.

In the present invention, the content of the constituent unit derived from the monomer (Y2) (namely, at least one monomer selected from the group consisting of the monomer (A2) and the monomer (B2)) in the polymer (X2) is preferably 48% by mass or more. When the content is 48% by mass or more, it is easy to allow all retention force under high temperature, low-temperature attachability, and adhesiveness to a low-polar adherend to be favorable along with a high bio rate.

The content of the constituent unit derived from the monomer (Y2) is more preferably 70% by mass or more, further preferably 80% by mass or more, still further preferably 90% by mass or more from the viewpoint that various performances described above are enhanced along with a high bio rate. The content of the constituent unit derived from the monomer (Y2) is preferably 99% by mass or less, more preferably 98% by mass or less, further preferably 97.5% by mass or less, for example, so that a functional group-containing monomer described below is comprised in a predetermined amount.

The monomer (A2) preferably comprises at least one (meth)acrylate selected from the group consisting of n-heptyl (meth)acrylate, n-tetradecyl (meth)acrylate and n-octadecyl (meth)acrylate, as described above. The content of the constituent unit derived from such a (meth)acrylate in the polymer (X2) is preferably 48% by mass or more, more preferably 70% by mass or more, further preferably 80% by mass or more, particularly preferably 90% by mass or more from the viewpoint that various performances described above are enhanced along with a high bio rate. The content of the constituent unit derived from such a (meth)acrylate is preferably 99% by mass or less, more preferably 98% by mass or less, further preferably 97.5% by mass or less.

The monomer (A2) preferably comprises n-heptyl (meth)acrylate, and more preferably comprises n-heptyl (meth)acrylate as a main monomer from the viewpoint of the tan $\delta$ (23°C) and from the viewpoint that various performances described above are enhanced along with a high bio rate. The content of the constituent unit derived from n-heptyl (meth)acrylate in the polymer (X2) is specifically preferably 48% by mass or more, more preferably 70% by mass or more, further preferably 80% by mass or more, particularly preferably 90% by mass or more. The content of the constituent unit derived from n-heptyl (meth)acrylate is preferably 99% by mass or less, more preferably 98% by mass or less, further preferably 97.5% by mass or less. The n-heptyl (meth)acrylate is preferably n-heptyl acrylate.

The polymer (X2) preferably contains a constituent unit derived from any monomer other than the monomer (A2) and the monomer (B2). Such other monomer may be a monomer having a polymerizable carbon-carbon double bond such as a vinyl group or a (meth)acryloyl group. Such other monomer is preferably a monomer containing a polar group (hereinafter, "polar group-containing monomer (C)"). The polymer (X2), which contains the constituent unit derived from the polar group-containing monomer (C), thus allows the pressure-sensitive adhesive to be easily increased in pressure-sensitive adhesion force and also easily enhanced in retention force under high temperature, low-temperature attachability, adhesiveness to a low-polar adherend, and the like.

The polar group is a functional group containing active hydrogen, and specific examples include a carboxy group, a hydroxyl group, an amino group, and an amide group. The polar group may be a functional group which can react with a crosslinking agent described below. The polar group-containing monomer (C) may be used singly or in combinations of two or more thereof. The polar group-containing monomer (C) is the same as that described in the section of the first invention, and thus the description thereof is omitted.

The weight-average molecular weight (Mw) of the polymer (X2) is preferably 200000 or more and 1100000 or less. When the weight-average molecular weight (Mw) is 200000 or more, the pressure-sensitive adhesive can be increased in shear strength and the like and the pressure-sensitive adhesive can be increased in retention force under high temperature. When the Mw is 1100000 or less, the pressure-sensitive adhesive is favorable in pressure-sensitive adhesion force, and is easily enhanced in low-temperature attachability, adhesiveness to a low-polar adherend, and the like.

The weight-average molecular weight (Mw) is more preferably 300000 or more, further preferably 400000 or more, and more preferably 1050000 or less, further preferably 1000000 or less, from such viewpoints.

The weight-average molecular weight (Mw) can be appropriately adjusted by appropriately selecting the amount of a polymerization initiator used, polymerization conditions such as the polymerization temperature, the polymerization method, and the like.

The weight-average molecular weight is the weight-average molecular weight in terms of standard polystyrene, as measured by gel permeation chromatography (GPC).

The polymer (X2) serves as a main component in the pressure-sensitive adhesive. The content of the polymer (X2) in the pressure-sensitive adhesive is, for example, 50% by mass or more, preferably 60% by mass or more, more preferably 65% by mass or more in order to impart appropriate pressure-sensitive adhesion performance. The content of the polymer (X2) is preferably 99% by mass or less, further preferably 95% by mass or less, further preferably 92% by mass or less so that component(s) other than the polymer (X2) such as a tackifier and/or a crosslinking agent can be compounded in predetermined amount(s) with the pressure-sensitive adhesive.

A low-molecular weight component of the polymer (X2) corresponds to a sol content, and thus the properties of the sol content of the pressure-sensitive adhesive can be adjusted by modifying the molecular weight and the molecular weight distribution of the polymer (X2) by a polymerization method. The amount of a crosslinking agent compounded can be modified to thereby allow the low-molecular weight component of the polymer (X2) not to be crosslinked, but remain in the pressure-sensitive adhesive, and thus the properties of the sol content of the pressure-sensitive adhesive can be adjusted by modifying the amount of a crosslinking agent compounded. Examples of the low-molecular weight component of the polymer (X2) include an oligomer derived from a monomer as a raw material of the polymer (X2).

<Method for producing polymer (X2)>

The polymer (X2) can be obtained by a radical reaction of a monomer mixture serving as the raw material in the presence of a polymerization initiator. Thus, the molecular weight distribution of the polymer (X2) can be considerably broad and the sol fraction can be increased.

The manner of the radical reaction is not particularly limited, and examples include free radical polymerization

and living radical polymerization. Free radical polymerization can allow the molecular weight distribution to be broad, to result in an increase in amount of a low-molecular weight component generated, as compared with living radical polymerization. As a result, the sol content of the pressure-sensitive adhesive can be more increased, and all retention force under high temperature, low-temperature attachability, and adhesiveness to a low-polar adherend can be further favorable along with a high bio rate. The polymerization method is not particularly limited, and a conventionally known method can be used. Examples include solution polymerization (boiling point polymerization or constant temperature polymerization), emulsion polymerization, suspension polymerization, and bulk polymerization. In particular, solution polymerization is preferable because synthesis is simple. The method for producing the polymer (X2) is the same as the method for producing the polymer (X1), described in the section of the first invention, and thus the description thereof is omitted.

The polymer (X2) in the pressure-sensitive adhesive of the pressure-sensitive adhesive sheet of the present invention may be a polymer obtained by the above production method, to which a low-molecular weight component (Z) is added. As described above, the properties of the sol content of the pressure-sensitive adhesive of the pressure-sensitive adhesive sheet of the present invention can be adjusted so as to be in the above-mentioned ranges, by modifying the molecular weight and the molecular weight distribution of the polymer (X2) by a polymerization method. In this regard, the properties of the sol content of the pressure-sensitive adhesive of the pressure-sensitive adhesive sheet of the present invention can also be adjusted so as to be in the above-mentioned ranges, by using the low-molecular weight component (Z). The low-molecular weight component (Z) also has a function as a tackifier.

The low-molecular weight component (Z) is preferably an oligomer of a monomer as a raw material of the polymer (X2). Accordingly, the low-molecular weight component (Z) is preferably an oligomer containing the constituent unit derived from at least one monomer (Y2) selected from the group consisting of the monomer (A2) represented by the general formula (4) and the monomer (B2) represented by the general formula (5). The monomer used in the low-molecular weight component (Z) is described in the section of "Polymer (X2)" above, and the description of the monomer used in the low-molecular weight component (Z) is omitted.

Among the above-mentioned monomers (A2) and (B2), n-heptyl (meth)acrylate, tetradecyl (meth)acrylate and octadecyl (meth)acrylate are preferable, and in particular n-heptyl (meth)acrylate is more preferable and n-heptyl acrylate is further preferable, as in the polymer (X2). Accordingly, the low-molecular weight component (Z) is preferably any of a n-heptyl (meth)acrylate oligomer, a tetradecyl (meth)acrylate oligomer and an octadecyl (meth)acrylate oligomer, in particular more preferably a n-heptyl (meth)acrylate oligomer, further preferably a n-heptyl acrylate oligomer.

The content of the low-molecular weight component (Z) in the polymer (X2) is not particularly limited, and may be appropriately adjusted so that various properties of a gel fraction are in the above ranges.

<Tackifier>

The pressure-sensitive adhesive of the pressure-sensitive adhesive sheet of the present invention preferably comprises a tackifier in addition to the polymer (X2). The tackifier to be added to the polymer (X2), is the same as the tackifier, in addition to the polymer (X1), described in the section of the first invention, except for the content as described below, and thus the description thereof is omitted.

In a case where the pressure-sensitive adhesive comprises the tackifier, the content of the tackifier is not particularly limited, and is preferably 10 parts by mass or more and 50 parts by mass or less based on 100 parts by mass of the polymer (X2). When the content of the tackifier is equal to or more than the lower limit value, low-temperature attachability and adhesiveness to a low-polar adherend are easily favorable. When the content is equal to or less than the upper limit value, retention force under high temperature can be prevented from deteriorating. In the second invention, the content of the tackifier is more preferably 12 parts by mass or more and 40 parts by mass or less, further preferably 14 parts by mass or more and 30 parts by mass or less from such viewpoints.

<Crosslinking agent>

The pressure-sensitive adhesive of the pressure-sensitive adhesive sheet of the present invention is preferably crosslinked by compounding a crosslinking agent. In other words, the pressure-sensitive adhesive is preferably a crosslinked product of a pressure-sensitive adhesive composition comprising a crosslinking agent in addition to the polymer (X2), or the polymer (X2) and the tackifier. The crosslinking agent to be added to the polymer (X2) is the same as the crosslinking agent to be added to the polymer (X1) described in the section of the first invention, except for the amount of compounding as described below, and thus the description thereof is omitted.

The amount of the crosslinking agent compounded in the pressure-sensitive adhesive may be appropriately modified depending on the type of the polymer (X2) and desired physical properties such as the crosslinking degree, and is, for example, 0.1 parts by mass or more and 20 parts by mass or less, preferably 0.5 parts by mass or more and 8 parts by mass or less, more preferably 0.6 parts by mass or more and 4 parts by mass or less based on 100 parts by mass of the polymer (X2) in the second invention.

<Other additive(s)>

The pressure-sensitive adhesive of the pressure-sensitive adhesive sheet of the present invention may comprise, when necessary, additive(s) such as a silane coupling agent, an antioxidant, an ultraviolet inhibitor, a plasticizer, an emulsifier, a softener, a filler, a pigment, and/or a dye. A biological material is preferably selected for such additive(s) as much as possible from the viewpoint of an increase in bio rate.

<Production of pressure-sensitive adhesive>

The pressure-sensitive adhesive of the pressure-sensitive adhesive sheet of the present invention may be formed from, for example, a pressure-sensitive adhesive composition prepared. The pressure-sensitive adhesive composition comprises components for forming the pressure-sensitive adhesive. The pressure-sensitive adhesive composition preferably comprises the above-mentioned polymer (X2). The pressure-sensitive adhesive composition may further comprise, when necessary, a tackifier, a crosslinking agent, other additive(s) and/or the like. The pressure-sensitive adhesive composition may be diluted with a diluting solution such as an organic solvent or the like. The diluting solution may be the solvent used in synthesis of the polymer (X2), or one added after synthesis of the polymer (X2).

The pressure-sensitive adhesive composition may be crosslinked by, when necessary, heating, drying and/or the like and formed into the pressure-sensitive adhesive. The pressure-sensitive adhesive is used for the pressure-sensitive adhesive sheet of the present invention. The heating temperature in the crosslinking can be appropriately set to thereby appropriately adjust the peak top molecular weight of the sol content.

The heating temperature in the crosslinking is not particularly limited, and is, for example, 90°C or more and 130°C or less, preferably 100°C or more and 120°C or less. The heating time is, for example, 30 seconds or more and 10 minutes or less, preferably 1 minute or more and 5 minutes or less. It is also preferable for progression of such a crosslinking reaction to dry and then cure the pressure-sensitive adhesive. The curing temperature is preferably 20°C or more and 60°C or less, more preferably 30°C or more and 50°C or less. The curing time is preferably 1 day or more and 10 days or less, more preferably 2 days or more and 5 days or less.

<Pressure-sensitive adhesive sheet>

The pressure-sensitive adhesive sheet of the present invention comprises the pressure-sensitive adhesive, and specifically comprises a pressure-sensitive adhesive layer comprising the pressure-sensitive adhesive. The pressure-sensitive adhesive sheet may be a pressure-sensitive adhesive sheet comprising no base material or may be a pressure-sensitive adhesive sheet comprising a base material, and is preferably a pressure-sensitive adhesive sheet comprising a base material.

The pressure-sensitive adhesive sheet comprising no base material is, for example, a non-support tape. The non-support tape is a double sided pressure-sensitive adhesive tape comprising no base material and being used in the form of a single pressure-sensitive adhesive layer. The pressure-sensitive adhesive sheet comprising a base material is, for example, a pressure-sensitive adhesive tape. The pressure-sensitive adhesive tape comprises a base material and a pressure-sensitive adhesive layer provided on at least one surface of the base material. In this case, the pressure-sensitive adhesive tape may be a double sided pressure-sensitive adhesive tape in which a pressure-sensitive adhesive layer is provided on each of both surfaces of the base material, or may be a pressure-sensitive adhesive single coated tape in which a pressure-sensitive adhesive layer is provided on only one surface of the base material.

Herein, at least one pressure-sensitive adhesive layer may be formed by the pressure-sensitive adhesive in such a double sided pressure-sensitive adhesive tape comprising a pressure-sensitive adhesive layer on each of both surfaces of the base material.

A surface exposed of the pressure-sensitive adhesive layer in the pressure-sensitive adhesive sheet may be protected by appropriately attaching a release sheet. The release sheet, in which at least one surface of a base material of the release sheet is coated with a release agent, serves as a release surface, and may be attached so that the release surface is in contact with the pressure-sensitive adhesive layer.

[Base material]

The base material used in the pressure-sensitive adhesive sheet is not particularly limited, and is preferably any of a resin film, a non-woven cloth or a foam. The base material used in the pressure-sensitive adhesive sheet is the same as the base material of the pressure-sensitive adhesive tape described in the section of the first invention, and thus the description thereof is omitted.

The thickness of the pressure-sensitive adhesive layer in the pressure-sensitive adhesive sheet is not particularly limited, and may be, for example, about 5 μm or more and 200 μm or less and is preferably 10 μm or more and 100

μm or less. When the thickness of the pressure-sensitive adhesive layer is in the range, the resulting pressure-sensitive adhesive sheet can exhibit sufficient pressure-sensitive adhesion force.

The total thickness (the total thickness of the base material and the pressure-sensitive adhesive layer) of the pressure-sensitive adhesive sheet is preferably 10 μm or more and 2200 μm or less. When the total thickness of the pressure-sensitive adhesive sheet is in the range, the resulting pressure-sensitive adhesive sheet can exhibit sufficient pressure-sensitive adhesion force.

(Tackiness value)

The peeling limit value at 23°C of a pressure-sensitive adhesive tape, measured in a tackiness test, is preferably 90 gf·s or more in the pressure-sensitive adhesive of the pressure-sensitive adhesive sheet of the present invention. The tackiness test is performed as follows.

First, a PET base material having a thickness of 23 μm is coated with a pressure-sensitive adhesion layer having a thickness of 50 μm, and a pressure-sensitive adhesive tape is put on a plate set at 23°C in a tackiness tester (for example, TAC-1000 manufactured by Rhesca Co., Ltd.) so that the pressure-sensitive adhesion layer turns up. The tape is secured from above with a sample holder attached to the tackiness tester. Next, a cylindrical stainless probe having a diameter of 5 mm is pressed onto the pressure-sensitive adhesive tape at a probe temperature of 23°C, a pressing speed of 5 mm/s and a pressing load of 100 gf, and retained in this state for 10 seconds. Thereafter, the probe is pulled at a pulling speed of 5 mm/s. The force here applied to the pressure-sensitive adhesive tape is measured.

While the above description is made with, as an example, a case where the pressure-sensitive adhesive forms the pressure-sensitive adhesive tape, the pressure-sensitive adhesive may be placed and subjected to the same measurement on the plate set at 23°C in the tackiness tester also in a case where no pressure-sensitive adhesive tape is formed.

The peeling limit value means an integration value from time T1 representing a force of zero to the time representing a maximum force (peak top) in a force-time curve illustrating the force applied to the pressure-sensitive adhesive tape at 23°C, measured in the tackiness test. In the tackiness test, the probe is pressed onto the pressure-sensitive adhesive tape, to thereby result in lowering of the force-time curve, and thereafter the probe is started to be pulled, to thereby result in rise of the force-time curve. The integration value from time T1 representing a force of zero to time T2 representing the maximum force (peak top) is calculated, and defined as the peeling limit value.

By adjusting the peeling limit value in the above range, the pressure-sensitive adhesive tape can be inhibited from being peeled even under high-temperature and high-humidity and under a situation where a restoring force is applied. A preferable lower limit of the peeling limit value is 100 gf·s, and a more preferable lower limit thereof is 110 gf·s. The upper limit of the peeling limit value is not particularly limited.

<Bio rate>

The bio rate in the pressure-sensitive adhesive sheet of the present invention is preferably 40% by mass or more, more preferably 50% by mass or more, further preferably 60% by mass or more from the same viewpoint as in the pressure-sensitive adhesive described above. The bio rate is more preferable as it is higher, and may be 100% by mass or less. The bio rate in the pressure-sensitive adhesive sheet generally differs depending on each constituent member (for example, pressure-sensitive adhesive layer and base material). Thus, the bio rate may be calculated by determining the bio rate in such each constituent member and determining the weighted average with the mass of such each constituent member as weighing.

(Method for producing pressure-sensitive adhesive sheet)

The method for producing the pressure-sensitive adhesive sheet is not particularly limited, and a conventionally known method can be adopted. The method for producing the pressure-sensitive adhesive sheet is here the same as the method for producing the pressure-sensitive adhesive tape, described in the section of the first invention, and thus the description thereof is omitted.

(Application of pressure-sensitive adhesive sheet)

The pressure-sensitive adhesive sheet of the present invention is not particularly limited with respect to an application thereof, and is preferably used in electrical appliance and/or vehicle applications. The method for producing the pressure-sensitive adhesive sheet is here the same as in applications of the pressure-sensitive adhesive and the pressure-sensitive adhesive tape described in the section of the first invention, and thus the description thereof is omitted.

The present invention may also provide a combination of the first invention and the second invention.

Examples

Hereinafter, the present invention is described with reference to Examples, but the present invention is not limited to the scope of these Examples.
«First Example»

[Measurement and evaluation methods]

Each of physical properties was measured and evaluated as follows.

<Elastic modulus>

The storage elastic modulus G' and the loss elastic modulus G" at each temperature, and the glass transition temperature (Tg) were measured with a polymer dynamic viscoelastic measurement apparatus "itkDVA-200" (manufactured by IT Keisoku Seigyo Co., Ltd.) in the following conditions.

Measurement mode: shear
Rate of temperature rise: 5°C/min
Measurement temperature range: -30 to 150°C
Set strain: 0.1%
Frequency: 10 Hz

A measurement specimen was produced by forming a pressure-sensitive adhesive composition solution prepared in each of Examples and Comparative Examples so that a specimen shape finally obtained had a thickness of 0.1 mm, a width of 0.6 mm and a length of 10 mm, and heating and drying the resultant in the same conditions as in formation of a pressure-sensitive adhesive layer in such each Example.

<Weight-average molecular weight>

The weight-average molecular weight (Mw) of the polymer (X1) was measured with a GPC apparatus "HLC822GPC" (manufactured by Tosoh Corporation), and was determined as the value in terms of polystyrene. Specifically, a diluted liquid obtained by diluting the resulting polymer (X1) with tetrahydrofuran (THF) by 50-fold was filtered by a filter (material: polytetrafluoroethylene, pore diameter: 0.2 μm), and thus a measurement sample was prepared. The measurement sample was fed to a gel permeation chromatograph (manufactured by Waters Corporation, 2690 Separations Model) and subjected to GPC measurement in conditions of a flow rate of the sample of 1 mL/min and a column temperature of 40°C to measure the molecular weight of the polymer (X1) in terms of polystyrene, and thus the weight-average molecular weight was determined.

<Crosslinking degree>

W1 (g) of the pressure-sensitive adhesive (specimen) was taken, the specimen taken was immersed in ethyl acetate at 23°C for 24 hours, and the undissolved content was subjected to filtration with a 200-mesh wire net. The residue on the wire net was dried in a condition of 110°C for 1 hour, the mass W2 (g) after drying was measured, and the gel fraction (crosslinking degree) was calculated by the following expression.

$$\text{Gel fraction (\% by mass)} = 100 \times \text{W2/W1}$$

<Bio rate>

The bio rate in the pressure-sensitive adhesive was measured according to ASTM 6866.

<Low-temperature attachability>

One surface of a double sided pressure-sensitive adhesive tape cut to a size of a width of 25 mm and a length of 100 mm was bonded onto a polypropylene plate (PP1300 manufactured by C.I. TAKIRON Corporation) having a thickness of 2 mm, a width of 50 mm and a length of 100 mm at 0°C so as to have a length of adhesion of 75 mm, according to JIS Z-1528 "Double sided pressure-sensitive adhesive tape". After other surface of the double sided pressure-sensitive adhesive tape was backed by a PET film, a 2-kg roller was stroked thereon at 0°C for compression bonding, and thus an adhesion test piece was made. The resulting adhesion test piece was left to still stand in an atmosphere at 0°C for 60 minutes and thereafter pulled at a tensile speed of 200 mm/min with an Instron tester under an environment at 0°C, peeling from the polypropylene plate was made at a peeling angle of 180°, and the peeling strength (N/25 mm) was measured. The low-temperature attachability was evaluated based on the results of the peeling strength according to the following criteria.

A: a peeling strength of 5 N/25 mm or more.
B: a peeling strength of 3 N/25 mm or more and less than 5 N/25 mm.
C: less than 3 N/25 mm.

<Pressure-sensitive adhesion force to PP>

One surface of a double sided pressure-sensitive adhesive tape cut to a size of a width of 25 mm and a length of 100 mm was bonded onto a polypropylene plate (PP1300 manufactured by C.I. TAKIRON Corporation) having a thickness of 2 mm, a width of 50 mm and a length of 100 mm at 23°C and 50% RH so as to have a length of adhesion of 75 mm, according to JIS Z-1528 "Double sided pressure-sensitive adhesive tape". After other surface of the double sided pressure-sensitive adhesive tape was backed by a PET film, a 2-kg roller was stroked thereon at 23°C and 50% RH for compression bonding, and thus an adhesion test piece was made. The resulting adhesion test piece was left to still stand in an atmosphere at 23°C and 50% RH for 20 minutes and thereafter pulled at a tensile speed of 200 mm/min with an Instron tester, peeling from the polypropylene plate was made at a peeling angle of 180°, and thus the peeling strength (N/25 mm) was measured at 23°C. The pressure-sensitive adhesion force to PP was evaluated based on the results of the peeling strength according to the following criteria.

A: a peeling strength of 15 N/25 mm or more.
B: a peeling strength of 10 N/25 mm or more and less than 15 N/25 mm.
C: a peeling strength of less than 10 N/25 mm.

<Retention force at high temperature>

One surface of a double sided pressure-sensitive adhesive tape cut to a size of a width of 25 mm and a length of 100 mm was bonded to a cold-rolled stainless steel plate (SUS 304 plate) having a thickness of 1.5 mm, a width of 25 mm and a length of 100 mm at 23°C with being displaced in a longitudinal direction so that the length of adhesion was 25 mm and the double sided pressure-sensitive adhesive tape was protruded at a length of 75 mm from an end of the SUS304 plate, according to JISZ-1528. Thereafter, another surface of the double sided pressure-sensitive adhesive tape was backed by a PET film, thereafter a 2-kg roller was stroked thereon for compression bonding, and thus an adhesion test piece was made.

After the resulting adhesion test piece was left to still stand in an atmosphere at 23°C and 50% RH for 20 minutes, the adhesion test piece was suspended vertically in a constant-temperature drier at 40°C for 1 hour with the side of the double sided pressure-sensitive adhesive tape protruded being downside. Next, a load of 1 kg was applied to a lower end of the double sided pressure-sensitive adhesive tape to vertically suspend the tape at 40°C for 24 hours, and the distance of displacement (mm) of an adhesion portion 1 hour later was measured. The distance of displacement was evaluated according to the following criteria.

A: a distance of displacement of less than 0.5 mm.
B: a distance of displacement of 0.5 mm or more and less than 2 mm.
C: a distance of displacement of 2 mm or more.

Components used in Examples and Comparative Examples are as follows.

<Monomer (A1)>

(Main monomer)

n-Heptyl acrylate (HA(C7)):
n-Heptyl acrylate, corresponding to a compound where $R^2$ in the general formula (1) was biological carbon, was prepared by an esterification reaction of acrylic acid with n-heptyl alcohol. n-Heptyl alcohol was prepared by cracking castor oil-derived ricinoleic acid as a raw material.

(Comonomer)

2-Ethylhexyl acrylate (2EHA): manufactured by Mitsubishi Chemicals Corporation

<Other monomers>

Butyl acrylate (BA): manufactured by Mitsubishi Chemicals Corporation Acrylic acid (AAc): manufactured by Nippon Shokubai Co., Ltd.

2-Hydroxyethyl acrylate (HEA): manufactured by Osaka Organic Chemical Industry Ltd.

<Tackifier (TF)>

Polymerized rosin ester resin, hydroxyl value: 46, softening point: 150°C, content rate of biological carbon: 95% by mass

<Crosslinking agent>

Polyisocyanate-based crosslinking agent, "Coronate L-45" manufactured by Tosoh Corporation

(Example 1)

[Synthesis of polymer (X1)]

After addition of ethyl acetate as a polymerization solvent into a reaction vessel and bubbling with nitrogen, the reaction vessel was heated to start reflux with flow of nitrogen. Subsequently, a polymerization initiator solution obtained by diluting 0.1 parts by mass of azobisisobutyronitrile as a polymerization initiator with ethyl acetate by 10-fold was loaded into the reaction vessel, and 96.9 parts by mass of n-heptyl acrylate (HA(C7)), 2.9 parts by mass of acrylic acid (AAc) and 0.2 parts by mass of 2-hydroxyethyl acrylate (HEA) were added dropwise over 2 hours. After completion of such dropping, a polymerization initiator solution obtained by diluting 0.1 parts by mass of azobisisobutyronitrile as a polymerization initiator with ethyl acetate by 10-fold was again loaded into the reaction vessel, and a polymerization reaction was performed for 4 hours, to thereby provide a solution comprising the polymer (X1). The weight-average molecular weight of the resulting polymer (X1) was measured, and then was 600000.

[Production of double sided pressure-sensitive adhesive tape]

A pressure-sensitive adhesive composition solution was prepared by adding to the resulting solution comprising the polymer (X1), 0.8 parts by mass of the crosslinking agent and 15 parts by mass of the tackifier based on 100 parts by mass of the polymer (X1). A release surface of a release sheet where one surface was subjected to a release treatment was coated with the pressure-sensitive adhesive composition solution, and the resultant was heated and dried, to thereby form a pressure-sensitive adhesive layer. The resulting pressure-sensitive adhesive layer was transferred onto each of both surfaces of a non-woven cloth as a base material, and thus a double sided pressure-sensitive adhesive tape was obtained where the pressure-sensitive adhesive layer was provided on each of both surfaces of the base material.

The pressure-sensitive adhesive was taken from the pressure-sensitive adhesive layer of the resulting double sided pressure-sensitive adhesive tape, and the crosslinking degree and the bio rate were measured. A measurement specimen was also produced from the pressure-sensitive adhesive composition solution, and the storage elastic modulus G', the loss elastic modulus G" and the glass transition temperature (Tg) were measured. Furthermore, the double sided pressure-sensitive adhesive tape was used to evaluate the low-temperature attachability, the adhesion force to PP and the retention force under high temperature. The evaluation results are shown in Table 2.

(Examples 2 and 3)

The same manner as in Example 1 was performed except that the respective amounts of the tackifier (TF) and the crosslinking agent compounded were changed as those (parts by mass) described in Table 1.

(Example 4)

The same manner as in Example 1 was performed except that the time of the polymerization reaction in production of the polymer (X1) was changed to 5 hours.

(Example 5)

The same manner as in Example 1 was performed except that the time of the polymerization reaction in production of the polymer (X1) was changed to 5.5 hours and furthermore the amount of the crosslinking agent compounded was changed as that (parts by mass) described in Table 1.

(Example 6)

The same manner as in Example 1 was performed except that the amounts of the monomers compounded in production of the polymer (X1) were changed to proportions shown in Table 1 and the respective amounts of the tackifier (TF) and the crosslinking agent compounded were changed as those (parts by mass) described in Table 1.

(Comparative Example 1)

The same manner as in Example 1 was performed except that the time of the polymerization reaction in production of the polymer (X1) was changed to 7 hours and furthermore the respective amounts of the tackifier (TF) and the crosslinking agent compounded were changed as those (parts by mass) described in Table 1.

(Comparative Example 2)

The same manner as in Example 1 was performed except that the time of the polymerization reaction in production of the polymer (X1) was changed to 2.5 hours and furthermore the respective amounts of the tackifier (TF) and the crosslinking agent compounded were changed as those (parts by mass) described in Table 1.

(Comparative Example 3)

The same manner as in Example 1 was performed except that the types and the amounts of compounding of the monomers in production of the polymer (X1) were changed as shown in Table 1 and the respective amounts of the tackifier (TF) and the crosslinking agent compounded were changed as those (parts by mass) described in Table 1.

[Table 1]

| | Type of main monomer | Main monomer (parts by mass) | Type of comonomer | Comonomer (parts by mass) | AAc (parts by mass) | HEA (parts by mass) | Molecular weight ($\times 10^4$) | Softening point (°C) of TF | TF (parts by mass) | Type of crosslinking agent | Crosslinking agent (part(s) by mass) |
|---|---|---|---|---|---|---|---|---|---|---|---|
| Example 1 | HA (C7) | 96.9 | - | - | 2.9 | 0.2 | 60 | 150 | 15 | L-45 | 0.8 |
| Example 2 | HA (C7) | 96.9 | - | - | 2.9 | 0.2 | 60 | 150 | 20 | L-45 | 1 |
| Example 3 | HA (C7) | 96.9 | - | - | 2.9 | 0.2 | 60 | 150 | 30 | L-45 | 1.5 |
| Example 4 | HA (C7) | 96.9 | - | - | 2.9 | 0.2 | 80 | 150 | 15 | L-45 | 0.8 |
| Example 5 | HA (C7) | 96.9 | - | - | 2.9 | 0.2 | 90 | 150 | 15 | L-45 | 1 |
| Example 6 | HA (C7) | 95.1 | - | - | 4.8 | 0.2 | 60 | 150 | 35 | L-45 | 1.2 |
| Comparative Example 1 | HA (C7) | 96.9 | - | - | 2.9 | 0.2 | 120 | 150 | 10 | L-45 | 0.6 |
| Comparative Example 2 | HA (C7) | 96.9 | - | - | 2.9 | 0.2 | 20 | 150 | 25 | L-45 | 0.4 |
| Comparative Example 3 | BA (C4) | 72.7 | 2EHA | 24.2 | 2.9 | 0.2 | 50 | 150 | 14 | L-45 | 1.2 |

* "Molecular weight" represents weight-average molecular weight (Mw).
* "parts by mass" with respect to each monomer means value based on 100 parts by mass of amount of total monomer compounded in synthesis of polymer (X1). Polymer (X1) can be considered to comprise constituent unit derived from each monomer described in Table 1 in amount described in Table 1.
* Respective amounts of tackifier (TF) and crosslinking agent compounded are represented by parts by mass based on 100 parts by mass of polymer (X1).

[Table 2]

| | log G' (0°C) [log Pa] | log G' (23°C) [log Pa] | log G' (80°C) [log Pa] | tan δ (23°C) | Viscoelasticity Tg (°C) | Crosslinking degree | Low-temperature attachability | Pressure-sensitive adhesion force to PP | Retention force under high temperature | Bio rate (%) |
|---|---|---|---|---|---|---|---|---|---|---|
| Example 1 | 5.3 | 4.9 | 4.5 | 0.81 | -25 | 40% | A | B | A | 70 |
| Example 2 | 5.5 | 4.9 | 4.2 | 0.92 | -18 | 50% | A | A | A | 70 |
| Example 3 | 6.2 | 5.2 | 4.2 | 1.17 | -5 | 45% | A | A | B | 70 |
| Example 4 | 5.3 | 5.0 | 4.7 | 0.80 | -25 | 50% | B | B | A | 70 |
| Example 5 | 5.3 | 5.0 | 4.7 | 1.05 | -25 | 60% | B | B | A | 70 |
| Example 6 | 6.2 | 5.2 | 4.2 | 1.19 | 7 | 50% | B | A | B | 70 |
| Comparative Example 1 | 5.1 | 4.8 | 4.4 | 0.66 | -25 | 55% | C | C | A | 70 |
| Comparative Example 2 | 5.2 | 4.6 | 4.0 | 0.74 | -16 | 50% | A | A | C | 70 |
| Comparative Example 3 | 5.9 | 5.2 | 4.5 | 0.75 | -10 | 50% | B | A | A | 16 |

In each of Examples above, the pressure-sensitive adhesive comprised the polymer (X1) containing the constituent unit derived from the monomer (A1) in an amount equal to or more than the predetermined amount and the tan δ (23°C) was 0.8 to 1.3, and thus all retention force under high temperature, low-temperature attachability, and adhesiveness to a low-polar adherend (polypropylene resin) were favorable. On the contrary, in each of Comparative Examples, the polymer (X1) did not comprise the constituent unit derived from the monomer (A1) in an amount equal to or more than the predetermined amount or the tan δ (23°C) was out of the range, and thus not all retention force under high temperature, low-temperature attachability, and adhesiveness to a low-polar adherend (polypropylene resin) could be favorable along with a high bio rate.

<<Second Example>>

[Measurement and evaluation methods]

Each of physical properties was measured and evaluated as follows.

<Peak top molecular weight (Mtp)>

The pressure-sensitive adhesive taken from the pressure-sensitive adhesive tape was immersed in tetrahydrofuran (THF) at room temperature with shaking for 24 hours. Thereafter, a sample of the pressure-sensitive adhesive was taken out with a 200-mesh filter, an immersion liquid was filtered with the filter, and the resulting filtrate was adopted as a sample solution comprising the sol content of the pressure-sensitive adhesive. The resulting sample solution was fed to gel permeation chromatography (GPC, for example, "e2695" manufactured by Waters Corporation), and GPC measurement was performed using tetrahydrofuran (THF) in a mobile phase in conditions of a flow rate of the sample of 1 mL/min and a column temperature of 40°C to measure the molecular weight distribution of the molecular weight in terms of polystyrene. For example, two columns of "GPC KF-806L" manufactured by Showa Denko K.K. were connected in series and then used. The peak top molecular weight (Mtp) of the sol content of the pressure-sensitive adhesive, according to GPC, was calculated from the resulting molecular weight distribution curve. The peak derived from the tackifier (TF), according to GPC, was here excluded. Accordingly, the peak top molecular weight (Mtp) of the sol content of the pressure-sensitive adhesive, according to GPC, was the peak top molecular weight of the sol content of the polymer as a main component of the pressure-sensitive adhesive, according to GPC.

<Weight-average molecular weight (Mw), dispersivity (D), sol fraction ($R_{sol}$) and degree of softness (S)>

The weight-average molecular weight and the number-average molecular weight of the sol content of the pressure-sensitive adhesive were measured with GPC in the same manner as the measurement of the peak top molecular weight (Mtp) described above. The resulting weight-average molecular weight was divided by the number-average molecular weight, to calculate the dispersivity (D) of the sol content. The gel fraction was measured by the following method, and the gel fraction was subtracted from 100% by mass, to calculate the sol fraction ($R_{sol}$). The degree of softness (S) was calculated from the resulting weight-average molecular weight (Mw), dispersivity (D) and sol fraction ($R_{sol}$) above. The peak derived from the tackifier (TF), according to GPC, was here excluded. Accordingly, the weight-average molecular weight (Mw) and the dispersivity (D) of the sol content of the pressure-sensitive adhesive were respectively the weight-average molecular weight and the dispersivity of the sol content of the polymer as a main component of the pressure-sensitive adhesive.

W1 (g) of the pressure-sensitive adhesive (specimen) was taken, and the undissolved content in immersion of the specimen taken, in THF at 23°C for 24 hours, was subjected to filtration with a 200-mesh wire net. The residue on the wire net was dried in a condition of 110°C for 1 hour, the mass W2 (g) after drying was measured, and the gel fraction was calculated by the following expression.

$$\text{Gel fraction (\% by mass)} = 100 \times W2/W1$$

<Glass transition temperature (Tg)>

The glass transition temperature (Tg) was measured by the same method as the method for measuring the glass transition temperature (Tg) in First Example.

<Bio rate>

The bio rate in the pressure-sensitive adhesive was measured according to ASTM 6866.

<Elastic modulus>

The storage elastic modulus G' and the loss elastic modulus G" at each temperature were measured in the same conditions as in the method for measuring the elastic modulus in First Example. The storage elastic modulus G', the loss elastic modulus G" and tan δ at each temperature are shown with respect to only some of Examples and Comparative Examples.

<Pressure-sensitive adhesion force to PP>

The peeling strength (N/25 mm) at 23°C was measured by the same method as in "Pressure-sensitive adhesion force to PP" in First Example. The pressure-sensitive adhesion force to PP was evaluated based on the results of the peeling strength according to the following criteria.

A: a peeling strength of 13 N/25 mm or more.
B: a peeling strength of 10 N/25 mm or more and less than 13 N/25 mm.
C: a peeling strength of less than 10 N/25 mm.

<Retention force under high temperature>

The distance of displacement (mm) of an adhesion portion 1 hour later was measured by the same method as in "Retention force under high temperature" in First Example. Evaluation was made based on the distance of displacement according to the following criteria.

A: a distance of displacement of 0.5 mm or less.
B: a distance of displacement of more than 0.5 mm and less than 1 mm.
C: a distance of displacement of 1 mm or more.

<Low-temperature attachability>

The low-temperature attachability was evaluated by the same method as in "Low-temperature attachability" in First Example.
Components used in Examples and Comparative Examples are as follows.

<Monomer (A2)>

(Main monomer)

n-Heptyl acrylate (HA(C7)):
n-Heptyl acrylate, corresponding to a compound where $R^5$ in the general formula (2) was plant-derived carbon, was prepared by an esterification reaction of acrylic acid with n-heptyl alcohol. n-Heptyl alcohol was prepared by cracking castor oil-derived ricinoleic acid as a raw material.

<Other monomers>

Acrylic acid (AAc): manufactured by Nippon Shokubai Co., Ltd.
2-Hydroxyethyl acrylate (HEA): manufactured by Osaka Organic Chemical Industry Ltd.

<Tackifier (TF)>

Polymerized rosin ester resin, hydroxyl value: 46, softening point: 150°C, content rate of plant-derived carbon: 95% by mass

<Crosslinking agent>

Polyisocyanate-based crosslinking agent

(Example 7)

[Synthesis of polymer (X2)]

After addition of ethyl acetate as a polymerization solvent into a reaction vessel and bubbling with nitrogen, the reaction vessel was heated to start reflux with flow of nitrogen. Subsequently, a polymerization initiator solution obtained by diluting 0.1 parts by mass of azobisisobutyronitrile as a polymerization initiator with ethyl acetate by 10-fold was loaded into the reaction vessel, and 96.9 parts by mass of n-heptyl acrylate (HA(C7)), 2.9 parts by mass of acrylic acid (AAc) and 0.2 parts by mass of 2-hydroxyethyl acrylate (HEA) were added dropwise over 2 hours. After completion of such dropping, a polymerization initiator solution obtained by diluting 0.1 parts by mass of azobisisobutyronitrile as a polymerization initiator with ethyl acetate by 10-fold was again loaded into the reaction vessel, and a polymerization reaction was performed for 3.5 hours, to thereby provide a solution comprising the polymer (X2). The weight-average molecular weight of the resulting polymer (X2) was measured, and then was 500000.

[Production of double sided pressure-sensitive adhesive tape]

A pressure-sensitive adhesive composition solution was prepared by adding 25 parts by mass of the tackifier and 2.4 parts by mass of the crosslinking agent based on 100 parts by mass of the polymer (X2) to the resulting solution comprising the polymer (X2). A release surface of a release sheet where one surface was subjected to a release treatment was coated with the pressure-sensitive adhesive composition solution, and the resultant was heated and dried at 100°C for 3 minutes, to thereby form a pressure-sensitive adhesive layer. The resulting pressure-sensitive adhesive layer was transferred onto each of both surfaces of a non-woven cloth as a base material, and thus a double sided pressure-sensitive adhesive tape was obtained where the pressure-sensitive adhesive layer was provided on each of both surfaces of the base material.

The pressure-sensitive adhesive was taken from the pressure-sensitive adhesive layer of the resulting double sided pressure-sensitive adhesive tape, and the peak top molecular weight (Mtp), the weight-average molecular weight (Mw), the dispersivity (D), the sol fraction ($R_{sol}$), the degree of softness (S) and the bio rate were measured. A measurement specimen was also produced from the pressure-sensitive adhesive composition solution, and the glass transition temperature (Tg) was measured. Furthermore, the double sided pressure-sensitive adhesive tape was used to evaluate the adhesion force to PP, the retention force under high temperature and the low-temperature attachability. The evaluation results are shown in Table 2.

(Examples 8 and 9)

The same manner as in Example 1 was performed except that the respective amounts of the tackifier (TF) and the crosslinking agent compounded were changed as those (parts by mass) described in Table 1.

(Examples 10 to 14)

The same manner as in Example 1 was performed except that the time of the polymerization reaction in production of the polymer (X2) was changed, the weight-average molecular weight of the polymer (X2) was changed from 500000 to 800000, and furthermore the respective amounts of the tackifier (TF) and the crosslinking agent compounded were changed as those (parts by mass) described in Table 1.

(Examples 15 to 17)

The same manner as in Example 1 was performed except that the time of the polymerization reaction in production of the polymer (X2) was changed, the weight-average molecular weight of the polymer (X2) was changed from 500000 to 1000000, and furthermore the respective amounts of the tackifier (TF) and the crosslinking agent compounded were changed as those (parts by mass) described in Table 1.

(Comparative Example 4)

The same manner as in Example 1 was performed except that the time of the polymerization reaction in

production of the polymer (X2) was changed, the weight-average molecular weight of the polymer (X2) was changed from 500000 to 800000, and furthermore the respective amounts of the tackifier (TF) and the crosslinking agent compounded were changed as those (parts by mass) described in Table 1.

(Comparative Example 5)

The same manner as in Example 1 was performed except that the respective amounts of the tackifier (TF) and the crosslinking agent compounded were changed as those (parts by mass) described in Table 1.

(Comparative Example 6)

The same manner as in Example 1 was performed except that the time of the polymerization reaction in production of the polymer (X2) was changed, the weight-average molecular weight of the polymer (X2) was changed from 500000 to 1200000, and furthermore the respective amounts of the tackifier (TF) and the crosslinking agent compounded were changed as those (parts by mass) described in Table 1.

(Comparative Example 7)

The same manner as in Example 1 was performed except that the amount of the crosslinking agent compounded was that (parts by mass) described in Table 3.

Table 3

| | Polymer (X) | | | | | TF | | Crosslinking agent | |
|---|---|---|---|---|---|---|---|---|---|
| | Main monomer | | AAc (parts by mass) | HEA (parts by mass) | Molecular weight (× $10^4$) of polymer (X) | | | | |
| | Type of main monomer | Main monomer (parts by mass) | | | | Softening point (°C) of TF | TF (parts by mass) | Type of crosslinking agent | Crosslinking agent (part(s) by mass) |
| Example 7 | HA(C7) | 96.9 | 2.9 | 0.2 | 50 | 150 | 25 | Isocyanate-based | 2.4 |
| Example 8 | HA(C7) | 96.9 | 2.9 | 0.2 | 50 | 150 | 25 | Isocyanate-based | 2.8 |
| Example 9 | HA(C7) | 96.9 | 2.9 | 0.2 | 50 | 150 | 25 | Isocyanate-based | 3.2 |
| Example 10 | HA(C7) | 96.9 | 2.9 | 0.2 | 80 | 150 | 14 | Isocyanate-based | 1.0 |
| Example 11 | HA(C7) | 96.9 | 2.9 | 0.2 | 80 | 150 | 20 | Isocyanate-based | 1.4 |
| Example 12 | HA(C7) | 96.9 | 2.9 | 0.2 | 80 | 150 | 24 | Isocyanate-based | 2.5 |
| Example 13 | HA(C7) | 96.9 | 2.9 | 0.2 | 80 | 150 | 28 | Isocyanate-based | 1.7 |
| Example 14 | HA(C7) | 96.9 | 2.9 | 0.2 | 80 | 150 | 28 | Isocyanate-based | 2.7 |
| Example 15 | HA(C7) | 96.9 | 2.9 | 0.2 | 100 | 150 | 15 | Isocyanate-based | 0.6 |
| Example 16 | HA(C7) | 96.9 | 2.9 | 0.2 | 100 | 150 | 25 | Isocyanate-based | 0.9 |
| Example 17 | HA(C7) | 96.9 | 2.9 | 0.2 | 100 | 150 | 25 | Isocyanate-based | 1.2 |
| | | | | | | | | | |
| Comparative Example 4 | HA(C7) | 96.9 | 2.9 | 0.2 | 80 | 150 | 35 | Isocyanate-based | 2.9 |

(continued)

| | Polymer (X) | | | | | TF | | Crosslinking agent | |
|---|---|---|---|---|---|---|---|---|---|
| | Main monomer | | | | | | | | |
| | Type of main monomer | Main monomer (parts by mass) | AAc (parts by mass) | HEA (parts by mass) | Molecular weight (× $10^4$) of polymer (X) | Softening point (°C) of TF | TF (parts by mass) | Type of crosslinking agent | Crosslinking agent (part(s) by mass) |
| Comparative Example 5 | HA(C7) | 96.9 | 2.9 | 0.2 | 50 | 150 | 0 | Isocyanate-based | 0.8 |
| Comparative Example 6 | HA(C7) | 96.9 | 2.9 | 0.2 | 120 | 150 | 21 | Isocyanate-based | 1.5 |
| Comparative Example 7 | HA(C7) | 96.9 | 2.9 | 0.2 | 50 | 150 | 25 | Isocyanate-based | 0.0 |

* "Molecular weight" represents weight-average molecular weight (Mw).
* "parts by mass" with respect to each monomer means value based on 100 parts by mass of amount of total monomer compounded in synthesis of polymer (X2). Polymer (X2) can be considered to comprise constituent unit derived from each monomer described in Table 1 in amount described in Table 1.
* Respective amounts of tackifier (TF) and crosslinking agent compounded are represented by parts by mass based on 100 parts by mass of polymer (X2).

Table 4

| | Peak top molecular weight (Mtp) | Weight-average molecular weight (Mw) | Dispersivity (D) | Sol fraction ($R_{sol}$) (% by mass) | Gel fraction ($R_{gel}$) (% by mass) | Degree of softness (S) | Glass transition temperature (Tg) (°C) | Bio rate (%) | log G' (0°C) [log Pa] | log G' (23°C) [log Pa] | log G' (80°C) [log Pa] | tan δ (23°C) | Pressure-sensitive adhesion force to PP | Retention force under high temperature | Low-temperature attachability |
|---|---|---|---|---|---|---|---|---|---|---|---|---|---|---|---|
| Example 7 | 151808 | 381452 | 2.9 | 70.0% | 30.0% | 92393 | -3 | 70 | 6.04 | 5.23 | 4.20 | 1.02 | A | A | A |
| Example 8 | 149111 | 273618 | 2.3 | 59.0% | 41.0% | 70189 | -7.1 | 70 | 6.05 | 5.25 | 4.24 | 1.01 | A | A | A |
| Example 9 | 138778 | 212326 | 2.0 | 58.0% | 42.0% | 63153 | -1.2 | 70 | - | - | - | - | A | B | B |
| Example 10 | 178300 | 363156 | 2.7 | 56.0% | 44.0% | 75601 | -16.6 | 60 | - | - | - | - | A | A | A |
| Example 11 | 191456 | 455382 | 2.7 | 62.0% | 38.0% | 103420 | -10 | 65 | 5.67 | 5.00 | 4.18 | 0.91 | A | A | A |
| Example 12 | 157345 | 226148 | 1.8 | 46.0% | 54.0% | 56537 | -9.2 | 70 | 5.87 | 5.16 | 4.34 | 0.91 | B | A | B |
| Example 13 | 194888 | 428632 | 2.5 | 58.0% | 42.0% | 99046 | -8.1 | 70 | - | - | - | - | A | A | A |
| Example 14 | 163076 | 248847 | 1.7 | 50.0% | 50.0% | 73190 | -3.2 | 75 | - | - | - | - | B | A | B |
| Example 15 | 228551 | 580137 | 2.8 | 57.0% | 43.0% | 119378 | -16.6 | 60 | - | - | - | - | A | B | A |
| Example 16 | 240960 | 684711 | 2.7 | 65.0% | 35.0% | 164838 | -7.2 | 70 | - | - | - | - | A | B | A |
| Example 17 | 205542 | 466085 | 2.5 | 59.0% | 41.0% | 111785 | -7.6 | 70 | 5.89 | 5.13 | 4.32 | 0.95 | A | A | A |
| | | | | | | | | | | | | | | | |
| Comparative Example 4 | 175150 | 292928 | 1.9 | 56.0% | 44.0% | 85437 | 10 | 80 | - | - | - | - | A | A | C |
| Comparative Example 5 | 136306 | 199233 | 3.0 | 52.0% | 48.0% | 34192 | -20 | 51 | - | - | - | - | C | C | B |
| Comparative Example 6 | 372426 | 627403 | 2.8 | 55.0% | 45.0% | 125481 | -17 | 70 | 5.46 | 4.94 | 4.45 | 0.68 | C | A | B |
| Comparative Example 7 | 181505 | 443377 | 3.2 | 100.0% | 0.0% | 139427 | -20 | 70 | - | - | - | - | A | C | A |

In each of Examples above, the peak top molecular weight (Mtp) of the sol content of the pressure-sensitive adhesive, according to gel permeation chromatography (GPC), was 137000 or more and 300000 or less, the sol fraction ($R_{sol}$) in the pressure-sensitive adhesive was 90% by mass or less, and the glass transition temperature (Tg) of the pressure-sensitive adhesive was 5°C or less. As a result, all adhesiveness to a low-polar adherend (polypropylene resin), retention force under high temperature, and low-temperature attachability were favorable. On the contrary, in each of Comparative Examples, the peak top molecular weight (Mtp) of the sol content of the pressure-sensitive adhesive, according to gel permeation chromatography (GPC), was out of the range of 137000 or more and 300000 or less, the sol fraction ($R_{sol}$) in the pressure-sensitive adhesive was more than 90% by mass, or the glass transition temperature (Tg) of the pressure-sensitive adhesive was more than 5°C. Thus, not all adhesiveness to a low-polar adherend (polypropylene resin), retention force under high temperature, and low-temperature attachability could be favorable along with a high bio rate.

## Claims

1. A pressure-sensitive adhesive comprising a polymer (X1) containing 48% by mass or more of a constituent unit derived from at least one monomer (Y) selected from the group consisting of a monomer (A1) represented by the following general formula (1) and a monomer (B1) represented by the following general formula (2), having a tan δ (23°C) of 0.8 to 1.3 which is determined as G" (23°C)/G’ (23°C), wherein G’ (23°C) represents a storage elastic modulus at 23°C and G’ (23°C) represents a loss elastic modulus at 23°C:

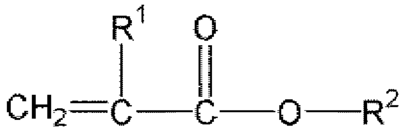
(1)

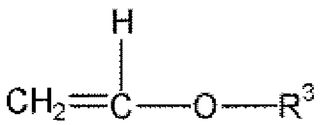
(2)

wherein $R^1$ represents H or $CH_3$, $R^2$ represents $-C_nH_{2n+1}$ and n represents an integer of 7 to 14, and wherein $R^3$ represents $-C(=O)C_mH_{2m+1}$ and m represents an integer of 6 to 13.

2. The pressure-sensitive adhesive according to claim 1, wherein a weight-average molecular weight of the polymer (X1) is 200000 to 1000000.

3. The pressure-sensitive adhesive according to claim 1 or 2, having a crosslinking degree of 10 to 70%.

4. The pressure-sensitive adhesive according to any one of claims 1 to 3, having a log G’ (0°C) [Pa] of 5.0 to 6.5, wherein a storage elastic modulus at 0°C is represented by G’ (0°C).

5. The pressure-sensitive adhesive according to any one of claims 1 to 4, having a log G’ (23°C) [Pa] of 4.8 to 5.5, wherein a storage elastic modulus at 23°C is represented by G’ (23°C).

6. The pressure-sensitive adhesive according to any one of claims 1 to 5, having a log G’ (80°C) [Pa] of 4.1 to 4.8, wherein a storage elastic modulus at 80°C is represented by G’ (80°C).

7. The pressure-sensitive adhesive according to any one of claims 1 to 6, having a glass transition temperature (Tg) of 15°C or less.

8. The pressure-sensitive adhesive according to any one of claims 1 to 7, having a content rate of biological carbon of 40% by mass or more.

9. The pressure-sensitive adhesive according to any one of claims 1 to 8, further comprising a tackifier.

10. A pressure-sensitive adhesive tape comprising a pressure-sensitive adhesive layer comprising the pressure-sensitive adhesive according to any one of claims 1 to 9.

**11.** The pressure-sensitive adhesive tape according to claim 10, further comprising a base material, wherein the pressure-sensitive adhesive layer is provided on at least one surface of the base material.

**12.** The pressure-sensitive adhesive tape according to claim 11, wherein the base material is any selected from the group consisting of a non-woven cloth, a polyethylene terephthalate film and a foam.

**13.** A securing method for securing a part constituting an electrical appliance, or an on-board member, by use of the pressure-sensitive adhesive according to any one of claims 1 to 9 or the pressure-sensitive adhesive tape according to any one of claims 10 to 12.

**14.** A pressure-sensitive adhesive sheet comprising the pressure-sensitive adhesive according to any one of claims 1 to 9, wherein

a peak top molecular weight (Mtp) of a sol content of the pressure-sensitive adhesive, according to gel permeation chromatography (GPC), is 137000 or more and 300000 or less,
a sol fraction ($R_{sol}$) in the pressure-sensitive adhesive is 90% by mass or less, and
a glass transition temperature (Tg) of the pressure-sensitive adhesive is 5°C or less.

**15.** A pressure-sensitive adhesive sheet comprising a pressure-sensitive adhesive comprising a biological component, a peak top molecular weight (Mtp) of a sol content of the pressure-sensitive adhesive, according to gel permeation chromatography (GPC), being 137000 or more and 300000 or less, a sol fraction ($R_{sol}$) in the pressure-sensitive adhesive being 90% by mass or less, and a glass transition temperature (Tg) of the pressure-sensitive adhesive being 5°C or less.

**16.** The pressure-sensitive adhesive sheet according to claim 15, wherein a degree of softness (S) represented by the following general expression (3), of the pressure-sensitive adhesive, is 50000 or more and 180000 or less:

$$S = Mw \times R_{sol}/D \qquad (3)$$

wherein Mw represents a weight-average molecular weight of the sol content of the pressure-sensitive adhesive, according to GPC, $R_{sol}$ represents a sol fraction in the pressure-sensitive adhesive, and D represents a dispersivity of the sol content of the pressure-sensitive adhesive, according to GPC.

**17.** The pressure-sensitive adhesive sheet according to claim 15 or 16, wherein the dispersivity (D) of the sol content of the pressure-sensitive adhesive, according to GPC, is 1.6 or more and less than 3.

**18.** The pressure-sensitive adhesive sheet according to any one of claims 15 to 17, wherein the weight-average molecular weight (Mw) of the sol content of the pressure-sensitive adhesive, according to GPC, is 190000 or more and 700000 or less.

**19.** The pressure-sensitive adhesive sheet according to any one of claims 15 to 18, wherein the sol fraction ($R_{sol}$) in the pressure-sensitive adhesive is 45% by mass or more and 75% by mass or less.

**20.** The pressure-sensitive adhesive sheet according to any one of claims 15 to 19, wherein the glass transition temperature (Tg) of the pressure-sensitive adhesive is 2.5°C or less.

**21.** The pressure-sensitive adhesive sheet according to any one of claims 15 to 20, wherein a bio rate in the pressure-sensitive adhesive is 51% or more.

**22.** The pressure-sensitive adhesive sheet according to any one of claims 15 to 21, wherein the pressure-sensitive adhesive comprises a polymer (X2) containing 48% by mass or more of a constituent unit derived from at least one monomer (Y2) selected from the group consisting of a monomer (A2) represented by the following general formula (4) and a monomer (B2) represented by the following general formula (5):

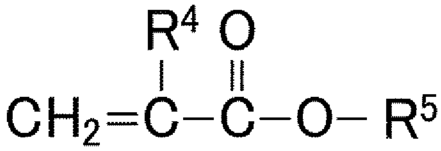

(4)

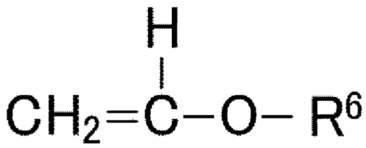

(5)

wherein $R^4$ represents H or $CH_3$, $R^5$ represents $-C_nH_{2n+1}$ and n represents an integer of 7 to 20, and wherein $R^6$ represents $-C(=O)C_mH_{2m+1}$ and m represents an integer of 6 to 13.

**23.** The pressure-sensitive adhesive sheet according to claim 22, wherein a content of a constituent unit derived from n-heptyl (meth)acrylate in the polymer (X2) is 48% by mass or more.

**24.** An electrical appliance comprising the pressure-sensitive adhesive according to any one of claims 1 to 9, or the pressure-sensitive adhesive tape according to any one of claims 10 to 12, or the pressure-sensitive adhesive sheet according to any one of claims 14 to 23.

**25.** An on-board member comprising the pressure-sensitive adhesive according to any one of claims 1 to 9, the pressure-sensitive adhesive tape according to any one of claims 10 to 12, or the pressure-sensitive adhesive sheet according to any one of claims 14 to 23.

Fig. 1

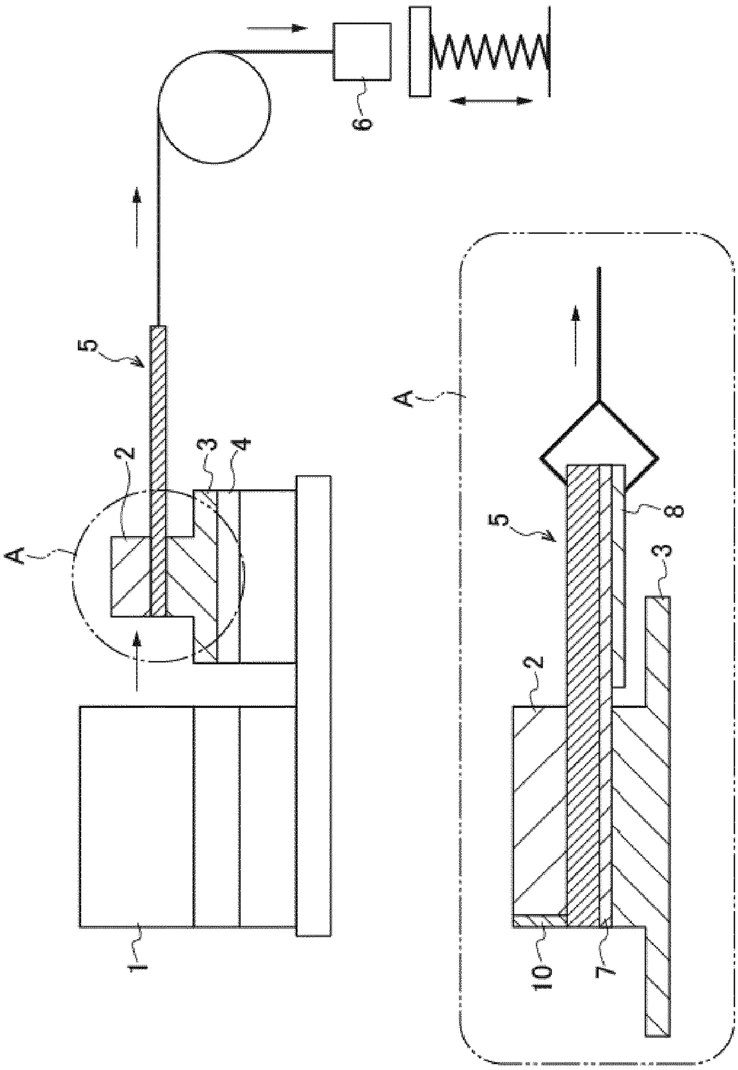

## INTERNATIONAL SEARCH REPORT

International application No. PCT/JP2020/047065

A. CLASSIFICATION OF SUBJECT MATTER

B32B 27/00(2006.01)i; C09J 131/02(2006.01)i; C09J 133/04(2006.01)i; C09J 133/08(2006.01)i; C09J 133/10(2006.01)i; C09J 201/00(2006.01)i; C09J 7/21(2018.01)i; C09J 7/22(2018.01)i; C09J 7/26(2018.01)i; C09J 7/38(2018.01)i

FI: C09J133/04; C09J7/22; C09J7/26; C09J7/21; C09J131/02; B32B27/00 M; C09J201/00; C09J133/08; C09J133/10; C09J7/38

According to International Patent Classification (IPC) or to both national classification and IPC

B. FIELDS SEARCHED

Minimum documentation searched (classification system followed by classification symbols)

B32B27/00; C09J131/02; C09J133/04; C09J133/08; C09J133/10; C09J201/00; C09J7/21; C09J7/22; C09J7/26; C09J7/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 58-046236 B2 (NITTO ELECTRIC IND CO., LTD.) 14 October 1983 (1983-10-14) claims, column 3, line 15 to column 4, line 22, column 7, line 39 to column 8, line 6, examples | 1-7, 9-14, 24-25<br>8, 15-23 |
| X<br>Y | JP 2014-152198 A (SOKEN CHEMICAL & ENGINEERING CO., LTD.) 25 August 2014 (2014-08-25) claims, paragraphs [0009], [0022], [0045], [0100]-[0110], fig. 2A-2C, 3, examples | 1-7, 9-14, 24-25<br>8, 15-23 |
| X<br>Y | JP 2016-000774 A (DAINIPPON PRINTING CO., LTD.) 07 January 2016 (2016-01-07) claims, paragraphs [0010], [0027]-[0031], [0051], examples | 1-7, 9-14, 24-25<br>8, 15-23 |

☒ Further documents are listed in the continuation of Box C. ☒ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 16 February 2021 (16.02.2021) | 22 February 2021 (22.02.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2020/047065

C (Continuation). DOCUMENTS CONSIDERED TO BE RELEVANT

| Category* | Citation of document, with indication, where appropriate, of the relevant passages | Relevant to claim No. |
|---|---|---|
| X<br><br>Y | JP 2019-047075 A (NITTO DENKO CORP.) 22 March 2019 (2019-03-22) claims, paragraphs [0018], [0024]-[0027], [0034], examples | 1-7, 9-14, 24-25<br>8, 15-23 |
| Y | JP 2014-531500 A (3M INNOVATIVE PROPERTIES COMPANY) 27 November 2014 (2014-11-27) claims, paragraphs [0047]-[0048], examples | 8, 15-23 |
| X | JP 2011-088961 A (NITTO DENKO CORP.) 06 May 2011 (2011-05-06) claims, paragraphs [0007], [0035]-[0036], [0059]-[0062], [0070], [0074]-[0075], examples | 15-21, 24-25 |
| X | JP 2010-037463 A (NITTO DENKO CORP.) 18 February 2010 (2010-02-18) claims, paragraphs [0013], [0045]-[0046], [0069]-[0072], [0079]-[0081], examples | 15-21, 24-25 |
| A | JP 2015-209527 A (SEKISUI FULLER COMPANY, LTD.) 24 November 2015 (2015-11-24) entire text | 1-25 |

Form PCT/ISA/210 (continuation of second sheet) (January 2015)

**INTERNATIONAL SEARCH REPORT**
Information on patent family members

International application No.
PCT/JP2020/047065

| Patent Documents referred in the Report | Publication Date | Patent Family | Publication Date |
|---|---|---|---|
| JP 58-046236 B2 | 14 Oct. 1983 | (Family: none) | |
| JP 2014-152198 A | 25 Aug. 2014 | (Family: none) | |
| JP 2016-000774 A | 07 Jan. 2016 | (Family: none) | |
| JP 2019-047075 A | 22 Mar. 2019 | CN 109468077 A entire text<br>KR 10-2019-0027731 A | |
| JP 2014-531500 A | 27 Nov. 2014 | US 2014/0367040 A1 claims, paragraphs [0053]-[0548], examples<br>WO 2013/048945 A1<br>EP 2573149 A1<br>CN 103827238 A<br>KR 10-2014-0075752 A | |
| JP 2011-088961 A | 06 May 2011 | (Family: none) | |
| JP 2010-037463 A | 18 Feb. 2010 | (Family: none) | |
| JP 2015-209527 A | 24 Nov. 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015021067 A
- JP 2015120876 A